# EUROPEAN PATENT SPECIFICATION

(11) **EP 2 067 520 B1**
(45) Date of publication and mention of the grant of the patent: **13.04.2016**
(21) Application number: 07807653.6
(22) Date of filing: 20.09.2007
(51) Int. Cl.: B01D 61/12, B01D 65/02, C02F 1/44, C02F 1/50, B01D 65/08

(54) **METHOD FOR OPERATING REVERSE OSMOSIS MEMBRANE FILTRATION PLANT, AND REVERSE OSMOSIS MEMBRANE FILTRATION PLANT**
VERFAHREN ZUM BETRIEB EINER UMKEHROSMOSEMEMBRANFILTRATIONSANLAGE UND UMKEHROSMOSEMEMBRANFILTRATIONSANLAGE
PROCÉDÉ DE FONCTIONNEMENT D'UNE INSTALLATION DE FILTRATION SUR MEMBRANE D'OSMOSE INVERSE, ET INSTALLATION DE FILTRATION SUR MEMBRANE D'OSMOSE INVERSE

(30) Priority: 25.09.2006 JP 2006259286
(43) Date of publication of application: 10.06.2009
(73) Proprietor: Toray Industries, Inc., Tokyo 103-8666 (JP)
(72) Inventor: ITO, Yohito, Shiga 520-8558 (JP); KANTANI, Seiko, Shiga 520-8558 (JP); UEMURA, Tadahiro, Shiga 520-8558 (JP); KITADE, Tamotsu, Shiga 520-8558 (JP)
(74) Representative: Hoefer & Partner Patentanwälte mbB
(86) International application number: PCT/JP2007/068301
(87) International publication number: WO 2008/038575

(56) References cited:
- JP-A- 2002 143 849
- JP-A- 2002 143 849
- JP-A- 2003 340 245
- JP-A- 2003 340 245
- JP-B2- 3 252 921
- US-A- 6 017 459
- US-A1- 2002 134 716
- US-B1- 6 306 291

## Description

### TECHNICAL FIELD

The present invention relates to a method for operating a reverse osmosis membrane filtration plant and a reverse osmosis membrane filtration plant suitably used for obtaining fresh water by desalinating sea water and saline water with a reverse osmosis membrane or obtaining reusable water by purifying treated sewage, treated wastewater and industrial wastewater.

### BACKGROUND ART

A membrane filtration process using a reverse osmosis membrane has been applied to many industries and the field of water treatment including sea water desalination, and its superiorities in separation property, energy efficiency, and the like have been proved as compared to the competing separation operations. On the other hand, in the reverse osmosis membrane filtration process, increase in operation pressure of reverse osmosis membrane and reduction in permeated water and separation property due to proliferation of bacteria in the form of a biofilm on a surface of the membrane at a side of water to be treated (at a side of non-permeated water of reverse osmosis membrane), i.e., biofouling, have been problems in operation. As used herein, the biofilm means a structural body formed of bacteria formed on a tube wall or a reverse osmosis membrane surface, which contains an extracellular polymer substance mainly including polysaccharides and proteins and bacteria, and familiar examples of the biofilm include slime in a sink and the like.

As a countermeasure against the biofouling, there has been proposed a technology of adding a chemical (hereinafter referred to as bactericide) for suppressing proliferation of biofilm to water to be treated, and many methods utilizing the technology have been proposed as effective methods. Examples include a method for suppressing proliferation of biofilm in which a bactericide containing, as an active ingredient, 2-methyl-4-isothiazolin-3-one, 5-chloro-2-methyl-4-isothiazolin-3-one, a salt thereof or a mixture thereof is added to water to be treated (Patent Document 1), a method in which acid or silver ions are added to water to be treated as a bactericide (Patent Documents 2 and 3), and the like. These methods attain a certain effect by suppressing the proliferation of biofilm by bringing a certain type of bactericide into contact with a reverse osmosis membrane continuously or intermittently. However, a method for accurately and conveniently evaluating and verifying effectiveness of conditions for adding bactericide in the reverse osmosis membrane filtration process has not been proposed yet.

As a proposal relating to a method for deciding conditions for adding bactericide, a method of deciding bactericide addition conditions depending on plural raw water quality evaluation results obtained by evaluating the number of cells included in the raw water, a concentration of assimilable organic carbon (hereinafter abbreviated to AOC), and a speed of biofilm formation of the raw water when supplying the raw water to which a bactericide is added to a separation membrane (reverse osmosis membrane) (Patent Document 4).

However, in actual operation, it is generally difficult to employ the above-described method, and, even when it is possible to employ the method, it is often difficult to achieve stable operation of reverse osmosis membrane filtration process. Therefore, the method has not been recognized as a useful method. For example, in a measurement of the AOC concentration, preparation of containers and a pre-treatment of samples are complicated, and it is remarkably difficult to store the samples. Therefore, as a matter of practice, it is difficult to conduct the AOC concentration measurement unless there is a laboratory near the reverse osmosis membrane filtration plant. Also, the method is not capable of preventing contamination at 100% in principle. Furthermore, apart from the capability of conducting the measurement, it has been proved that the AOC concentration is not exactly an index which is quantitatively relative to a degree of biofouling. For example, a reverse osmosis membrane filtration plate that stably operated for half a year irrespective of an AOC concentration exceeding 70 µg/L has been reported.

Also, although Patent Document 4 discloses a method for measuring a speed of biofilm formation of raw water in place of AOC, only the example of measuring a speed of formation of a biofilm on a glass immersed in sea water in the vicinity of an intake pipe is described, and the analysis of the sea water (raw water) taken by the intake pipe is described in the specification. However, in view of the facts that a microbiological water quality changes considerably depending on treatments at a raw water intake unit and a pre-treatment unit (e.g. addition of chlorine, flocculation/sand filtration, *etc.*) and that a biofilm amount is influenced not only by the water quality but also by water flow (from the view point of strength and detachment), the immersion into the intake sea water (raw water) is inappropriate as a point and conditions for water quality evaluation of the reverse osmosis membrane filtration unit. Also, assuming that the conditions of the water quality and the water flow are appropriate, the conditions still lack in reliability since it is impossible to directly and rapidly confirm effects of sterilization and cleaning in the case of controlling an operation method of a reverse osmosis membrane filtration plant based on the results of the biofilm formation speed measurement at the point where the bactericide and a cleaning agent do not flow.

Therefore, the bactericide addition conditions have been decided by following proven conditions, estimating based on an empirical rule, or taking time for on-site handling of biofouling, and a method for deciding the bactericide addition conditions, which is highly sensitive to be used generally, rational, highly reliable, convenient and rapid, has not been proposed yet. Also, since an application effect of bactericide has been judged mainly based on data including a pressure loss of reverse osmosis membrane module, a transmembrane pressure difference, an amount of permeated water, a permeated water quality, and the like, a considerable amount of biofilm has already been formed when abnormality is detected by using such data, thereby making it difficult to restore a reverse osmosis membrane property by sterilization and cleaning.

As a countermeasure against the biofouling, a technology of cleaning a reverse osmosis membrane by using a cleaning agent (chemical cleaning) has been proposed in addition to the method of using bactericide. Examples of the cleaning agent include sodium hydroxide, a chelator such as ethylenediamine-4-acetate (EDTA), a surfactant, 2-methyl-4-isothiazolin-3-one, 5-chloro-2-methyl-4-isothiazolin-3-one, and salts thereof which are used also as the bactericide, and the like, and these cleaning agents are used alone or in combination thereof. When there is a contamination with an inorganic substance in the case where the biofouling is the main cleaning object, alkali cleaning and acid cleaning are carried out repetitively. The chemical cleaning is conducted by circulating the cleaning agent in the reverse osmosis membrane module or impregnating the reverse osmosis membrane module into a liquid containing the cleaning agent, and whole or part of systems of the reverse osmosis membrane module is cleaned. In the same manner as in the case where the bactericide is added, in the chemical cleaning, methods and standards which enable highly sensitive, rational, convenient and rapid judgment of an effective cleaning agent, a concentration of the cleaning agent, a time for one cleaning, a frequency of cleaning and the like, as compared to the method and standards using the transmembrane pressure difference, the permeated water amount and the like, have not been proposed in the chemical cleaning.

Although a method of changing pre-treatment equipments such as flocculation/sand filtration, membrane filtration by an ultrafiltration membrane or a microfiltration membrane, and a pressure floatation and changing operation conditions for the pre-treatment equipments so as to suppress the biofilm generation in the reverse osmosis membrane filtration unit and the like have been proposed as countermeasures against the biofouling, a technology for highly sensitively, rationally, rapidly and simply judging the influences to be exerted on the biofilm formation suppression by the changes of the devices and the operation conditions has not been proposed, too.
Patent Document 1: JP-A-8-229363
Patent Document 2: JP-A-12-354744
Patent Document 3: JP-A-10-463
Patent Document 4: JP-A-2002-143849

US 2002/134716 A1 concerns a monitoring unit for monitoring the condition of a semi-permeable membrane in a water purification system, and particularly the condition of spiral membrane in a reverse osmosis water purification system. The monitoring unit comprises a flow chamber that includes an inlet for permitting ingress of a feed fluid into the flow chamber, and a feed fluid outlet for permitting at least partial through-flow of the feed fluid through the flow chamber such that cross-flow conditions apply in the flow chamber. The semi-permeable membrane is at least partly supported in the flow chamber. The monitoring unit further comprises at least one fluid outlet arranged in fluid communication with the flow chamber for permitting egress of fluid from the monitoring unit after having passed through the membrane; and an inspection window for permitting visual inspection of the semi-permeable membrane.

US 6 017 459 A describes an in-line apparatus for monitoring membrane deposition having an exterior body that defines an interior compartment for receiving a fluid stream. A coupon rack is positioned in the interior compartment and suspends at least one coupon holder. the coupon holder holds at least one membrane for collection of deposition present within a filtration system. The apparatus allows examination of membrane surface deposition without sacrificing a membrane element and also provides timely diagnostic information on a filtration system.

JP 2003 340245 A concerns a membrane treatment device which can stably and continuously be operated by washing a membrane with a high efficiency by selecting appropriate washing conditions, and a washing method therefor. In the membrane treatment device having a membrane module to filter water to be treated containing organic matter with the membrane, at least more than one line of a mini-membrane module having a membrane of a 1/2-1/100 fold dimension, a similar membrane quality and a shape to those of the module are placed in parallel and are so constituted that the same water fad to the module can be supplied to the module. The module is contained in a transparent case so that the membrane surface can be checked visually from outside. The length of the primary side of the module which makes a flow path for feeding the water in the module is preferably the same as that of the module. The washing method comprises a step of chemically washing the module before washing the module so as to check the recovery level of water permeability and the color of the membrane, a step of thereby determining the washing conditions which can provide a high washing efficiency and prevent discoloration of the membrane surface, and a step of chemically washing the module in the determined conditions.

### DISCLOSURE OF THE INVENTION

### Problems to be solved by the invention:

An object of the present invention is to provide a method for operating a reverse osmosis membrane filtration plant which enables operations including addition of bactericide, chemical cleaning, pre-treatment, and the like which are carried out for the purpose of preventing biofouling of a reverse osmosis membrane module of a reverse osmosis membrane filtration unit highly reliably, highly sensitively, rationally, rapidly and conveniently in a reverse osmosis membrane filtration plant, and the reverse osmosis membrane filtration plant.

### Means for solving the problems:

In order to attain the above-described object, a method for operating a reverse osmosis membrane filtration plant according to the present invention is defined in the appendant claims and has the following structure (1).
(1) A method for operating a reverse osmosis membrane filtration plant having a raw water intake unit, a pre-treatment unit, and a reverse osmosis membrane filtration unit having a reverse osmosis membrane module in this order, said method comprising:
   disposing a reverse osmosis membrane used as a biofilm formation base material in a flow container, wherein the reverse osmosis membrane is a rectangular sheet and is rolled in such a manner that a separation function layer surface serves as the inner side and the rolled reverse osmosis membrane is pushed into the flow container along an inner wall of the flow container, wherein the inner side is the part on which the evaluation water inside the flow container flows, so that reverse osmosis membrane module supply water sampled from piping branching at upstream of the first reverse osmosis membrane module in the reverse osmosis membrane filtration unit and/or reverse osmosis membrane module non-permeated water sampled from piping branching at downstream of the reverse osmosis membrane modules through which the reverse osmosis membrane module non-permeated water passes, are/is flowed on a surface of a separation function layer of the reverse osmosis membrane sheet used as a biofilm formation base material housed in the flow container, and that the reverse osmosis membrane module supply water and/or the reverse osmosis membrane module non-permeated water are/is not filtered by the reverse osmosis membrane sheet used as the biofilm formation base material housed in the flow container, under conditions that the reverse osmosis membrane module supply water and/or the reverse osmosis membrane module non-permeated water are/is flowed at a linear speed equal to a non-permeated water linear speed in the reverse osmosis membrane module of the reverse osmosis membrane filtration unit and equal to an average linear speed on the surface of the reverse osmosis membrane module on which the non-permeated water is flowed;
   evaluating a biofilm amount on the reverse osmosis membrane sheet used as the biofilm formation base material housed in the flow container at a frequency of from once a day to once in six months; and
   controlling the method for operating a reverse osmosis membrane filtration plant based on results of the evaluation,
   wherein the reverse osmosis membrane used as the biofilm formation base material is made of the same material as a reverse osmosis membrane which is used in the reverse osmosis membrane filtration plant.

More specifically, the operation method according to the reverse osmosis filtration plant operation method according to (1) in the present invention preferably contains the following constitutions (3) to (6):
(2) In (1), the biofilm formation base material is made of the same material as the reverse osmosis membrane which is used in the reverse osmosis membrane filtration plant.
(3) In (2), the biofilm amount on a surface of the biofilm formation base material is evaluated by the biofilm amount on a surface of the biofilm formation base material is evaluated by placing the reverse osmosis membrane which falls into a size of an inner diameter of D or less and a height of H or less with bending in a cylindrical flow container having an inner diameter of D and a height of H so as to orient a surface faced to the raw water during filtration to an inner side, and by cutting a part of the reverse osmosis membrane fixed in the cylindrical flow container by a physical resilience in a direction of the circumference.
(4) In (1), sterilization conditions or cleaning conditions of the reverse osmosis membrane filtration unit are controlled and similar treatments are carried out for the biofilm formation base material at the same time.
(5) In (1), the biofilm amount is evaluated based on ATP (adenosine-5'-triphosphate).
(6) When the evaluation is carried out by ATP, the plant operation method is controlled so as to achieve an ATP amount of 200 pg/cm² or less per unit surface.
(7) In (1), in the method for evaluating the biofilm amount formed in raw water having a salt concentration of 3% or more, such as sea water, by the ATP measurement method, the evaluation is carried out by comprising:
   (a) suspending the biofilm collected from the biofilm formation base material into pure water;
   (b) quantifying a luminosity of the suspension liquid of (a) by using a luciferase reaction;
   (c) measuring a salt concentration of the suspension liquid of (a);
   (d) calculating an ATP amount of the suspension liquid of (a) by using a correlation equation of a salt concentration inhibition to be imparted to a quantitation system using the luciferase reaction, a correlation equation of the ATP concentration and the luminosity in the absence of the inhibition, and results of (b) and (c); and
   (e) calculating the ATP amount per unit surface by using an area of the collected biofilm formation surface, a liquid volume of the suspended pure water, and the result of the ATP amount in the suspension liquid of (a) obtained by (d).

In order to attain the above-described object, a plant having the following constitutions is used.
(8) A reverse osmosis membrane filtration plant having a raw water intake unit, a pre-treatment unit, and a reverse osmosis membrane filtration unit having a reverse osmosis membrane module in this order, comprising:
   a piping branching at an upstream of the first reverse osmosis membrane module in the reverse osmosis membrane filtration unit for flowing a supply water and/or a piping branching at a downstream of the reverse osmosis membrane module in the reverse osmosis membrane filtration unit for flowing a reverse osmosis membrane non-permeated water;
   a flow container connected to a downstream of the piping(s); and
   a flow rate adjustment valve connected to an upstream or downstream of the flow container,
   wherein the reverse osmosis membrane is made of the same material as a reverse osmosis membrane which is used in the reverse osmosis membrane filtration unit is contained in the flow container in such a way that reverse osmosis membrane supply water and/or reverse osmosis membrane non-permeated water in the reverse osmosis membrane filtration unit are/is flowed parallel to a surface of a separation function layer of the reverse osmosis membrane used as the biofilm formation base material, and that the reverse osmosis membrane supply water and/or the reverse osmosis membrane non-permeated water are/is not filtered by the reverse osmosis membrane used as the biofilm formation base material, under water flow at a linear speed equal to a non-permeated water linear speed in the reverse osmosis membrane module of the reverse osmosis membrane filtration unit, and equal to an average linear speed on the surface of the reverse osmosis membrane module on which the non-permeated water is flowed and wherein
   the reverse osmosis membrane which falls into a size of a circumference of a circle having an inner diameter of D or less and a height of H or less is placed in a cylindrical flow container having an inner diameter of D and a height of H so as to orient a surface faced to the raw water during filtration to an inner side, and fixed in the cylindrical flow container by a physical resilience in a direction of the circumference of the reverse osmosis membrane.

### Effect of the invention:

When the method for operating a reverse osmosis membrane filtration plant and the reverse osmosis membrane filtration plant according to the present invention are used, it is possible to quantitatively monitor a biofilm amount on the reverse osmosis membrane of the reverse osmosis membrane filtration unit of the reverse osmosis membrane filtration plant, thereby making it possible to appropriately correct an operation method of the reverse osmosis membrane filtration plant including conditions for a bactericidal method and chemical cleaning of the reverse osmosis membrane, operation conditions of the pre-treatment unit, and the like before the occurrence of a pressure loss increase and a permeated water reduction. As a result of the effective countermeasure against the biofouling, it is possible to greatly increase stability and economic efficiency of the reverse osmosis membrane filtration plant operation. Also, it is possible to reliably, conveniently, rapidly and sensitively evaluate the biofilm amount as compared to the conventional technologies.

Furthermore, in response to the biofilm amount evaluation result, it is possible to avoid spending chemical liquid expenditure more than necessary in the case where the conditions for sterilization and cleaning are too intense, such as a case wherein a bactericide is added excessively and a cleaning power for reverse osmosis membrane is too strong. Also, since the sterilization and the chemical cleaning are mild, it is possible to avoid fouling of the reverse osmosis membrane module to a degree that performance is hardly restored by the cleaning, and it is possible to extend the life of the membrane module as well as to reduce the cost required for replacing the membrane.

Also, when the effects of sterilization and chemical cleaning are degraded or lost due to emergence of resistant bacteria and the like or when the bactericide and the cleaning agent are being used despite the effects have been lost, it is possible to recognize the degradation or loss of effects, thereby making it possible to rationally change the conditions for the sterilization and the chemical cleaning of the reverse osmosis membrane by changing the currently used agents.

### BRIEF DESCRIPTION OF THE DRAWINGS

Fig. 1 is a flowchart of a sea water desalination reverse osmosis membrane filtration plant.
Fig. 2 is a block diagram showing a biofilm formation evaluation device.
Fig. 3 is a biofilm formation base material (Teflon (registered trademark) ring).
Fig. 4 is a stainless steel stick with a ring hook, to which ring-like biofilm formation base materials are fitted as being overlapped with one another.
Fig. 5 is a biofilm formation base (reverse osmosis membrane sheet).

Description of Reference Numerals:
1: intake pipe
2: intake pump
3: hypochloric acid solution tank
4: flocculating agent solution tank
5: pH adjuster solution tank
6: sand filtration device
7: intermediate tank
8: safety filter
9: sodium hydrogensulfite solution tank
10: bactericide solution tank
11: reverse osmosis membrane module
12: reverse osmosis membrane permeated water tank
13: pH adjuster solution tank
14: calcium solution tank
15: cleaning agent solution tank
16a: flow container housing biofilm formation base material
16b: flow container housing biofilm formation base material
16c: flow container housing biofilm formation base material
17a: piping branching at upstream of first reverse osmosis membrane module in reverse osmosis membrane filtration unit
17b: piping branching at downstream of cleaning agent and bactericide addition point and at upstream of first reverse osmosis membrane module in reverse osmosis membrane filtration unit
17c: piping branching at downstream of reverse osmosis membrane modules, through which reverse osmosis membrane non-permeated water is passed
18: permeated water delivery pipe
19: flow rate adjustment valve
21: hypochloric acid solution supply pump
22: flocculating agent supply pump
23: pH adjuster solution supply pump
24: sodium hydrogensulfite solution supply pump
25: bactericide solution supply pump
26: pH adjuster solution supply pump
27: calcium solution supply pump
28: cleaning agent solution supply pump
29: high pressure pump
30: solution delivery pump
31: reverse osmosis membrane non-permeated water detoxifying solution tank
32: reverse osmosis membrane non-permeated water detoxifying treatment tank
33: reverse osmosis membrane non-permeated water discharge pipe
34: reverse osmosis membrane non-permeated water detoxifying solution supply pump
50: hose
51: flow meter
52: one-touch joint
53: flow container, open/close unit
54: flow container
55a: Teflon (registered trademark) ring
55b: reverse osmosis membrane
56: flow rate adjustment valve
57: stainless steel stick with ring hook
58: direction of flow
100: raw water intake unit
200: pre-treatment unit
300: reverse osmosis membrane filtration unit

### BEST MODE FOR CARRYING OUT THE INVENTION

Hereinafter, the operation method of a membrane filtration process according to the present invention is described in more details.

The operation method of a reverse osmosis membrane filtration plant according to the present invention is an operation method of a reverse osmosis membrane filtration plant having a raw water intake unit, a pre-treatment unit, and a reverse osmosis membrane filtration unit having a reverse osmosis membrane module in this order, the method comprises placing a biofilm formation base material under conditions of flowing reverse osmosis membrane supply water and/or reverse osmosis membrane non-permeated water in a reverse osmosis membrane filtration unit at a linear speed which is equal to a non-permeated water linear speed in the reverse osmosis membrane module of the reverse osmosis membrane filtration unit after a pre-treatment; and evaluating a biofilm amount on the biofilm formation base material at a frequency of from once per day to once in six months.

The present invention is based on the following concept.
(a) Formation of a biofilm on a surface of the reverse osmosis membrane module, which is minor as compared to a biofilm amount that causes biofouling, is tolerated.
(b) By evaluating a biofilm amount formed on a surface exposed to water which is equivalent to water flowing on a surface of the reverse osmosis membrane module at a non-permeated water side, a biofilm amount on the surface of the reverse osmosis membrane module at the non-permeated water side is indirectly evaluated and monitored.
(c) The evaluation results are fed back to the operation method of the plant so as to keep the biofilm amount of (b) to the tolerable level or to operate more economically when the tolerable level has been achieved.

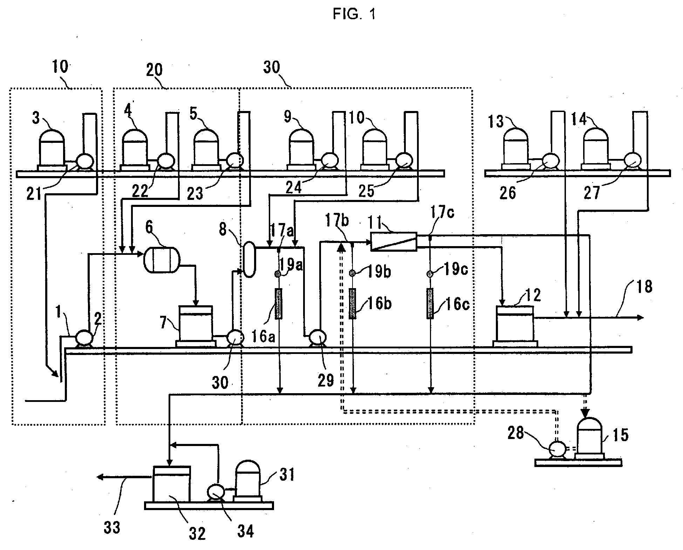

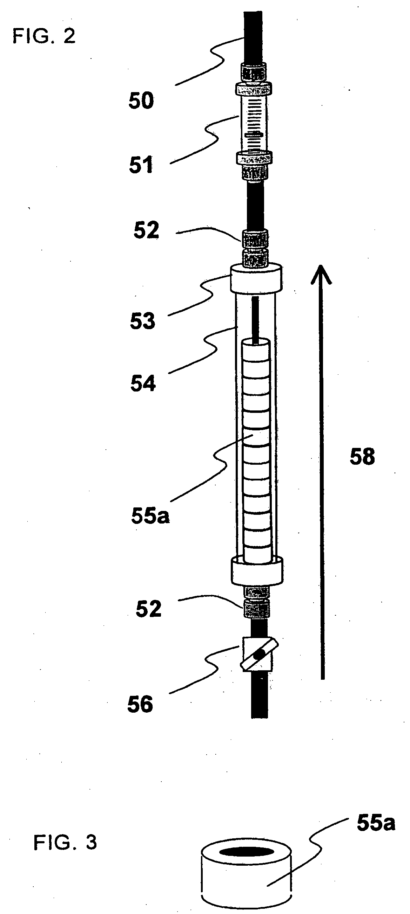

Although the present invention is described below in detail with reference to the drawings, contents of the present invention are not limited to the drawings. Fig. 1 shows a flowchart of a reverse osmosis membrane filtration plant for sea water desalination that employs the present invention, and Figs. 2 to 5 show block diagrams of a biofilm formation evaluation device and a biofilm formation base material.

In Fig. 1, the reverse osmosis membrane filtration plant are provided with an intake pipe 1, an intake pump 2, a sand filtration device 6, an intermediate tank 7, a safety filter 8, a high pressure pump 29, a reverse osmosis membrane module 11, and a reverse osmosis membrane non-permeated water discharge line, which are connected in this order from an upstream along a flow of water.

In the reverse osmosis membrane filtration plant, water may be taken in directly from a surface part of the sea or a so-called deep water may be pumped up. Also, water may be taken by an infiltration water intake method that uses seabed sand as a filter. Particles including sands and the like are preferably separated from pumped-up sea water at a settling reservoir or the like.

At a point upstream of the intake pump 2, a hypochloric acid solution is added as a bactericide by a hypochloric acid solution supply pump 21 for the purpose of preventing biofilm formation and deposition of ocean organisms such as shellfish and seaweed on the intake pipe 1 and piping downstream of the intake pipe 1. As the bactericide, oxidizing bactericides such as a sodium hypochlorite solution which can generate dissociated chlorine are generally used, and bactericides other than the hypochloric acid solution may be used, so long as the bactericides achieve the equivalent effect.

At a point between the intake pump 2 and the sand filtration device 6, a flocculating agent solution for promoting solid-liquid separation caused by sand filtration is added. Also, a pH adjuster solution such as sulfuric acid is added to sea water by a pH adjuster solution supply pump 23 for the purpose of suppressing generation of a scale such as calcium sulfate on a line at the non-permeated water side of the reverse osmosis membrane module 11. Examples of the flocculating agent include ferric chloride, polyaluminum chloride and the like. As the pre-treatment, other than the sand filtration device 6, a treatment using a floatation separation device, a ultrafiltration membrane, a microfiltration membrane, or a loose reverse osmosis membrane can be used. The pre-treatment is carried out for the purpose of purifying the taken raw water to a required degree in order to avoid exerting a load on the process steps at the downstream and may be appropriately selected depending on a degree of contamination of the taken raw water.

The taken raw water after the pre-treatment is stored in an intermediate tank 7 which is provided when so required for providing water amount adjustment function and water quality buffering function.

A safety filter 8 is provided at the downstream of the intermediate tank 7 when so required in order to prevent breakage of the high pressure pump 29 and the reverse osmosis membrane module 11 due to contaminants.

Next, a reducing agent such as sodium hydrogensulfite is added by a sodium hydrogensulfite solution supply pump 24. The reducing agent is added when the oxidizing bactericide is added at an upstream step in a raw water intake unit or the like for the purpose of preventing the reverse osmosis membrane from being deteriorated by residual chlorine and the like. Any chemical other than the sodium hydrogensulfite solution may be used, so long as the chemical has the same effect.

Next, the bactericide is added by a bactericide solution supply pump 25. A device for adding the bactericide is preferably provided with a control mechanism having a valve and a pump for controlling an additive amount, an addition time, an addition frequency, and the like in order to control the bactericide addition conductions. A position at which the chemical such as the bactericide is added can be decided arbitrarily and is preferably at the upstream or the downstream of the safety filter 8.

Next, the sea water pressurized by the high pressure pump 29 is supplied to the reverse osmosis membrane module 11.

A piping for adding a cleaning agent for chemical cleaning is provided at the upstream of the reverse osmosis membrane module 11. Although the point at which the cleaning agent is added is not particularly limited, the point is preferably at the downstream of the high pressure pump 29 since the high pressure pump 29 and the like can be corroded depending on the type of the cleaning agent.

The water supplied to the reverse osmosis membrane module 11 is separated into a permeated water and a non-permeated water, and the non-permeated water is discharged to the sea via a reverse osmosis membrane non-permeated water discharge pipe 33 after a pH adjustment and a bactericide detoxifying treatment in a reverse osmosis membrane non-permeated water detoxifying treatment tank 32.

After the reverse osmosis membrane permeated water is stored in the reverse osmosis membrane permeated water tank 12, a pH adjuster solution is added to the reverse osmosis membrane permeated water by a pH adjuster solution supply pump 26 at the downstream, and a calcium solution is added to the reverse osmosis membrane permeated water by a calcium solution supply pump 27 at the downstream, for example, so that the permeated water is sampled from the permeated water delivery pipe 18 as a desalinated water conforming to drinking water standard.

As used herein, the reverse osmosis membrane is a semipermeable membrane which permeates a part of components, such as a solvent, of the supply water and does not permeate the rest of the components, and a so-called nanofiltration membrane, a loose reverse osmosis membrane, and the like are included as the reverse osmosis membrane. As a material for the reverse osmosis membrane, a polymer material such as a cellulose acetate polymer, polyamide, polyester, polyimide, and a vinyl polymer is preferably used. A structure of the membrane may be an asymmetrical structure having a microdense layer provided on at least one side and fine pores each having a pore diameter which is increased gradually from the microdense layer to a membrane interior or the other side or may be a complex membrane structure having a separation function layer formed from another material and on the microdense layer of the asymmetrical membrane. A thickness of the membrane is preferably in the range of from 10 µm to 1 mm. As a representative reverse osmosis membrane, a cellulose acetate or polyamide asymmetrical membrane, a complex membrane having a polyamide or polyurea separation function layer, and the like are known, and, a superior effect is achieved by using the polyamide complex membrane in the present invention. Preferred examples of the reverse osmosis membrane include aromatic polyamide complex membranes disclosed in JP-A-62-121603, JP-A-8-138658, and U.S. Patent 4,277,344.

Also, as used herein, the reverse osmosis membrane module is obtained by assembling the above-described reverse osmosis membrane and so forth in a housing for practical use, and a spiral module, a tubular module, and a plate-and-frame module may be selected in the case of using a flat membrane. Among these, the spiral module has members such as a supply water line material and a permeated water line material as disclosed in JP-A-9-141060 and JP-A-9-141067, for example, and a significant effect is achieved in the case of using sea water having a high solute concentration as raw water or operating the device at a high pressure.

An operation pressure of the high pressure pump may be set appropriately depending on the type of supply water and the operation method and is preferably a relatively low pressure of about 0.1 to 3.0 MPa in the case where the supply water is a solution having a low osmotic pressure, such as saline water and ultra pure water, or is preferably a relatively high pressure of from about 2.5 to 15.0 MPa in the case of sea water desalination, wastewater treatment, useful material recovery, and the like in order to avoid wasting energy such as electric power as well as to obtain good permeated water quality. Also, in order to achieve an appropriate supply pressure and the operation pressure, a pump may be provided on an arbitrary line.

An operation temperature of the reverse osmosis membrane filtration unit can be appropriately set in the range of 0°C to 100°C since the supply water is frozen at a temperature lower than 0°C and is evaporated when the temperature is more than 100°C. In order to maintain good performance of the device and the reverse osmosis membrane, the operation temperature may be in the range of 5°C to 50°C. Details can be decided in accordance with technical information provided by the manufacturer.

A recovery rate of the reverse osmosis membrane filtration unit may appropriately be set in the range of 5% to 98%. In this case, it is necessary to consider the pre-treatment conditions and the operation pressure in response to qualities, concentrations, and osmotic pressures of the supply water and the non-permeated water (JP-A-8-108048). For example, the recovery rate is ordinarily set to 10% to 40%, or to 40% to 70% in the case of sea water desalination using a high efficiency device. In the case of saline water desalination or ultra pure water production, the recovery rate can be set to 70% or more, or 90% to 95%.

The reverse osmosis membrane module in the reverse osmosis membrane filtration unit can be of a single stage type or a multistage type and can be disposed in series or in parallel to the supply water. In the case of disposing in series, a boost pump can be provided between the adjacent modules.

The non-permeated water of the reverse osmosis membrane has a pressure energy which is preferably recovered for reducing the operation cost. The energy recovery can be conducted by using an energy recovery device attached to the high pressure pump at an arbitrary part, but the energy is preferably recovered by a dedicated turbine type energy recovery pump which is attached in the vicinity of the high pressure pump or between the adjacent modules. Also, a treatment capability of the desalination device can be in the range of 0.5 to 1,000,000 m³ as a water amount per day.

The piping in the reverse osmosis membrane filtration unit preferably has a structure in which the retention part is reduced as little as possible. Furthermore, for the purpose of preventing the scale generation, a pH level of the supply water is preferably acidic, and, since a case of using agents varied in quality as the bactericide and the cleaning agent is expected, a material having chemical resistance, such as a stainless steel and a two-phase stainless steel, is preferably used for the pipings, valves, and members through which the agents flow.

The desalination method of the present invention is also applicable to separation and concentration of a liquid and a solid matter using a microfiltration membrane and separation and concentration of a contamination component by using a ultrafiltration membrane and particularly suitable for performing separation and concentration of a soluble component using a reverse osmosis membrane or a nanofiltration membrane. Particularly, the desalination method is highly effective for desalination of sea water or saline water, production of industrial water, concentration of fruit juice or the like, clarifying tap water, an advanced treatment for tap water, and the like.

Hereinafter, a method for evaluating a biofilm amount, which is one of the characteristic points of the present invention, is described in detail.

The raw water intake unit in the present invention means a step which is formed of the intake pipe, the intake pump, and the like and used for taking a raw sea water in a plant. The pre-treatment unit means a step from a treatment of the taken sea water by using the pre-treatment device such as the sand filtration device to a temporary storage in the intermediate tank. The reverse osmosis membrane filtration unit means the one or more reverse osmosis membrane module or modules and a series of steps performed before supplying the sea water which has been subjected to the pre-treatment to the reverse osmosis membrane module(s). As used herein, the series of process steps means the filtration by the safety filter, the addition of a reducing agent such as sodium hydrosulfite, the addition of a bactericide for fouling prevention of the reverse osmosis membrane module, the addition of an anti-scale agent, and the like.

In the present invention, the reverse osmosis membrane supply water and/or the reverse osmosis membrane non-permeated water are evaluated. Fig. 1 shows the flowchart of the reverse osmosis membrane filtration plant. As used herein, the reverse osmosis membrane supply water means water present at the downstream of the pre-treatment unit 200 and in the reverse osmosis membrane filtration unit 300. In the case where there are plural reverse osmosis membrane modules 11, the reverse osmosis membrane supply water is sampled from a piping at the upstream of the first reverse osmosis membrane module 11 and has components and a temperature (-3°C to +5°C) which are the same as those of the reverse osmosis membrane supply water. In the case where there is one reverse osmosis membrane module 11, the reverse osmosis membrane supply water is sampled from a piping at the upstream of the first reverse osmosis membrane module 11 and has components and a temperature (-3°C to +5°C) which are the same as those of the reverse osmosis membrane supply water. Also, the reverse osmosis membrane non-permeated water is water sampled from a piping at the downstream of the reverse osmosis membrane module 11 and has components and a temperature (-3°C to +5°C) same as those of at least one of the reverse osmosis membrane non-permeated water. The points or point of sampling the reverse osmosis membrane supply water and/or the reverse osmosis membrane non-permeated water can be set in any one of a piping from the downstream of the intermediate tank 7 to the upstream of the safety filter 8, a piping from the downstream of the safety filter 8 to the upstream of the high pressure pump 29, a piping from the downstream of the high pressure pump 29 to the reverse osmosis membrane module 11, and a piping for flowing the reverse osmosis membrane non-permeated water of the reverse osmosis membrane module 11. At least one of the sampling points is preferably provided at the downstream of the addition points of the bactericide and the cleaning agent. With such constitution, it is possible to directly and rapidly verify the effects of sterilization and cleaning, thereby making it possible to operate the reverse osmosis membrane filtration unit 300 more stably and efficiently.

Since it has been found that it is possible to favorably perform the operation control on the reverse osmosis membrane filtration unit under a high pressure when water supply to the flow containers 16b and 16c housing the biofilm formation base material is based on the evaluation result of the biofilm amount formed during water supply under a reduced pressure, it is preferable to supply the water after considering safety, convenience, and the like in measurements and reducing the pressure in the case of sampling from the high pressure piping at the downstream of the high pressure pump 29. The reverse osmosis membrane supply water and/or the reverse osmosis membrane non-permeated waster are/is branched from the pipings 17a, 17b, and 17c to be supplied to the flow container 16 housing the biofilm formation base material using a pipe, a hose, or the like.

Figs. 2 to 5 show block diagrams of a biofilm formation evaluation device and a biofilm formation material, and the present invention is not limited to the drawings.

As used herein, the biofilm formation evaluation device is provided with a flow container 54 housing the biofilm formation base material 55, a flow rate adjustment valve 56, and a flow meter 51 disposed at the upstream or downstream of the flow container 54, and the flow container 54, the flow rate adjustment valve 56, and the flow meter 51 are connected with a hose 50 and a stainless steel piping member. A one-touch joint 52 is provided at each of opposite ends of the flow container 54 to make it easy to attach/detach the flow container to/from the biofilm formation evaluation device. In Fig. 1, the piping 17a branching from the upstream of the first reverse osmosis membrane module in the reverse osmosis membrane filtration unit 300, the piping 17b branching from the upstream of the first reverse osmosis membrane module in the reverse osmosis membrane filtration unit 300, the piping 17c branching from the downstream of the reverse osmosis membrane module 11 allowing passage of the reverse osmosis membrane non-permeated water, and the flow containers 16a, 16b, and 16c are connected by using the piping member (not shown) and the hose 50.

A flow container open/close unit 53 and the flow meter 51 provided at the most downstream part of the flow container 54 housing the biofilm formation base material 55 are connected to each other with a piping member. An outer periphery of a part at which the hose and the piping member are overlapped is preferably fastened by a hose band (not shown).

The shape of the flow container is not particularly limited, and examples of the shape include a triangular prism, a quadratic prism (rectangular parallelepiped), a multiangular prism, a cylindrical column, and the like. From the standpoint of uniformity of flow conditions influencing on reverse osmosis membrane shearing conditions and substance transport conditions and availability, a column which is a circular tube is preferably used, for example. A base material providing a surface for the biofilm amount measurement is housed in the flow container. At least one end of the flow container has a structure that makes it easy to transfer the biofilm formation base material from/into the flow container. As described above, since it has been found as a result of extensive research that it is possible to favorably perform the operation control based on the evaluation result of the biofilm amount formed under water flow after pressure reduction since the evaluation result has the correlativity with the operation result of the reverse osmosis membrane filtration unit under a high pressure. Accordingly, it is preferable to allow the water to flow to the flow container after the pressure reduction in view of the safety, convenience, and the like for the measurement. The reverse osmosis membrane supply water and the reverse osmosis membrane non-permeated water at the downstream of the high pressure pump is preferably flowed after the pressure reduction since it is possible to conduct the transfer of the biofilm formation base material into and from the flow container safely, conveniently, and rapidly in time course evaluation of the biofilm amount on the biofilm formation base material. Pressure resistance of the hose, the piping members, the flow rate adjustment valve, the flow container, and the like may be any one, so long as it is capable of enduring water pressure in the water flowing point, and pressure resistance and a sealing property of 2 kgf/cm² is satisfactory in general. Each of the joint parts may be reinforced with a sealing tape, a vinyl tape, a hose band, an epoxy resin, or the like, if necessary.

Any materials can be used for materials for the flow container, the piping members, the hose, and the flow rate adjustment valve, so long as the materials satisfy the above-described strength requirements and are resistant to the chemicals used for sterilization and chemical cleaning and reduced in elution and absorption of organic substances. As the material for the flow container, a transparent glass or polycarbonate is preferably used since these materials are hard enough and enable confirmation of the interior from the outside. Teflon (registered trademark), polyvinyl chloride, and a stainless steel can be used as the material for the piping members, and Teflon (registered trademark), polyvinyl chloride, and a fluorine resin can be used as the material for the hose. Although a length of the hose and the flow container is not limited, so long as the lengths satisfy handling easiness, but the hose is preferably short, and the length of the flow container is preferably about 60 cm in view of the handling easiness according to the experience of the inventor.

An inner diameter of the flow container is not particularly limited and can be decided depending on a flow rate of water to be taken so as to realize the conditions of the linear speed.

In the case of using a member having a low light blocking property as the members, such as the biofilm formation base material and the piping member, it is preferable to block light except at the measurement operation in order to avoid proliferation of seaweeds.

A flow rate of water flowing to the flow container is set in such a manner that a linear speed in the flow container after housing the biofilm formation base material becomes equal to an average linear speed on the surface of the reverse osmosis membrane module on which the non-permeated water is flowed in view of establishment of a similar growth environment and shearing environment. For example, in the case of the spiral cylindrical module, when a sectional area of a line at the reverse osmosis membrane non-permeation side in a direction of a cylinder axis is S and an average of the supply water flow rate to the reverse osmosis membrane module and the non-permeated water flow rate is F, the flow rate of water flowing to the flow container is preferably from 0.3 × F/S to less than 3 x F/S, more preferably from 0.7 x F/S to less than 1.3 x F/S. The flow rate of water flowing to the flow container can be measured by connecting the flow meter 51 at the upstream or downstream of the flow container 54 or can be measured by a volume or a weight of water collected for a certain period of time.

It is known that not only a temperature and a concentration of nutrients but also hydraulic conditions influence on deposition of bacteria, organic substances, and inorganic substances on biofilm, separation of these components from biofilm, strength of biofilm, and the like. The characteristics of the biofilm formed on the base material become considerably different from those of the biofilm formed on the surface of the reverse osmosis membrane module when the hydraulic conditions are deviated, and the hydraulic condition deviation makes it difficult to correctly evaluate and monitor the biofilm amount on the surface of the reverse osmosis membrane module. The linear speed of the reverse osmosis membrane module is generally in the range of 5 to 30 cm/s, although it changes depending on the position of the reverse osmosis membrane module, operation conditions, and the like.

A direction toward for which the flow container is disposed is not particularly limited, but the flow container is preferably disposed vertically with the liquid being flowed upward in the vertical direction and with an upper end being used as the flow container opening/closing unit to make it is easy to transfer the biofilm formation base material from/into the flow container.

Referring to Fig. 1, in the measurement of biofilm amount, the water flow to the flow container 54 is stopped by the valve or the like, and the flow container opening/closing unit 53 provided at the downstream end of the flow container housing the biofilm formation base material 55 is opened to carefully take out a part of the base material inside the flow container. After taking out the part of the base material, the flow container opening/closing unit 53 provided at the downstream end of the flow container 54 housing the rest of the base materials is closed to start flowing water again, and a biofilm amount on a surface of the taken base material is measured. For example, about 30 pieces of Teflon (registered trademark) rings shown in Fig. 3 are housed in the flow container 54 as being piled as the biofilm formation base material 55, and the water to be evaluated flows on an outer periphery and an inner periphery of the rings. The stainless steel stick 57 provided with a ring hook on one end thereof is inserted into the rings, and the stick is pulled up to take out a required number of the rings (2 to 3 pieces in general) with tweezers, so that a biofilm amount on the inner surface and the outer surface of the cylindrical column is measured.

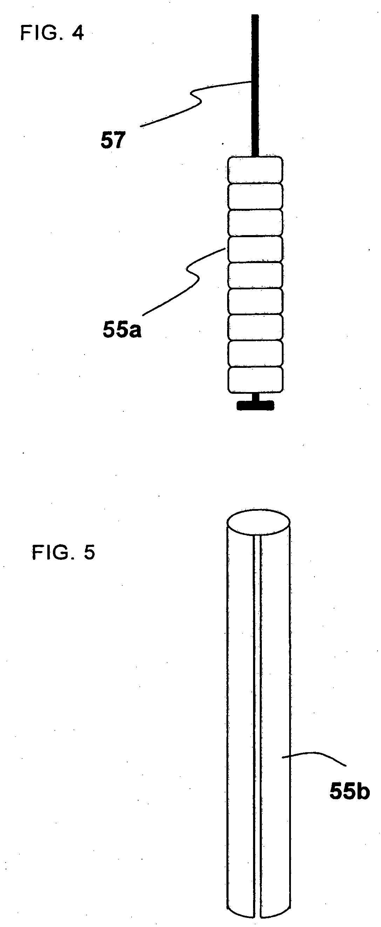

In the case of the present invention, i.e. when using the reverse osmosis membrane as the biofilm formation base material, a rectangular reverse osmosis membrane piece is rolled in such a manner that a separation function layer surface (at the side of raw water in filtration) serves as the inner side, and the rolled reverse osmosis membrane piece is pushed into the flow container 54 along an inner wall of the flow container 54 to be housed in the flow container 54 as shown in Fig. 5. As used herein, the inner side means the part on which the evaluation water inside the flow container 54 flows. The rolled reverse osmosis membrane piece is pushed into the flow container 54 along the inner wall so as to allow the evaluation water to flow on the separation function layer surface. In the evaluation, an upper end is pinched with tweezers to pull up and cut a certain amount of the reverse osmosis membrane, and the rest of the reverse osmosis membrane is housed again in the flow container 54 to start the water flow again. In the case of using a polycarbonate transparent flow container as the flow container 54 and housing the reverse osmosis membrane in the flow container, scaling can be added along the axial direction of the flow container in view of the convenience for adjusting an area to be cut at every measurement.

As a evaluation method for an amount of a biofilm formed under a flowing water containing a small amount of organic substances, such as a seawater supplied to the reverse osmosis membrane process, a biofouling formation speed evaluation method (BFR method) using a similar evaluation device for the purpose of water quality evaluation of drinking water has been proposed (Non-Patent Document: Dick Van Der Kooij, et al.; Water Research; Vol. 29; No. 7; pages 1655 to 1662 (1995)). In the BFR method, a glass column is inserted into Teflon rings or glass rings which are piled along a vertical direction, and evaluation water is supplied to periodically evaluate a biofilm formed on the ring surface. At the biofilm amount evaluation, the ring is immersed into a circular tube containing 10 ml of water, followed by sonic, and a dispersed biofilm amount is measured by quantitating an ATP amount of the dispersion.

In the field of water quality evaluation, Teflon and glass have been considered as suitable materials for the material of the base material for biofilm amount measurement since they are less subject to elution of organic substances which are bait for bacteria and release of substances which inhibit proliferation of bacteria. However, as a result of comparative investigation, it has been detected that the highest reliability and highly sensitive evaluation are achieved by using the membrane identical with that used for the reverse osmosis membrane module in the reverse osmosis membrane filtration unit for membrane surface monitoring in a reverse osmosis membrane filtration plant. More specifically, in the case of using the membrane which is the same as the membrane of the reverse osmosis membrane module, it is possible to shorten the time required for initial biofilm formation as compared with the cases of using Teflon and glass, and it has been found that the use of the reverse osmosis membrane is preferable for early detection. Also, in tests using the same supply water, increase speeds after the formation of biofilm in the cases of using the reverse osmosis membrane, Teflon (registered trademark), and glass were identical to one another, and it has been confirmed that organic substance elution from the reverse osmosis membrane does not adversely affect on the evaluation.

Described in the following is one example of comparison between a case of using Teflon as the biofilm formation base material and a case of using a reverse osmosis membrane for the biofilm formation base material in the ATP measurement method which is most suitable for the biofilm amount evaluation as described later in this specification. In a certain plant experiment, increase Speeds in biofilm formation amount were measured by using Teflon (registered trademark) rings and a reverse osmosis membrane which are housed simultaneously in one flow container. One of the Teflon (registered trademark) rings was taken out with tweezers by pulling up a stainless steel with a ring hook, and an end of the reverse osmosis membrane was drawn out with tweezers to cut by the size of about 40 to 45 mm x 80 to 90 mm. In the case of the Teflon (registered trademark) ring, the surface fouling of about 15 cm² which was collected from the outer surface and the inner surface excluding the upper and lower sections was removed from the ring by using a sterilized swab. In the case of the reverse osmosis membrane, the surface fouling of about 15 cm² which was collected from a half of the membrane surface at the water flowing side after the cutting was removed by using a sterilized swab. Each of the foulings was suspended in 3 ml of a distilled water (Otsuka Pharmaceutical Co., Ltd.; for injection use; 20 ml/ample) to be ultimately collected. A biofilm amount of each of the collected liquids of the ring and the reverse osmosis membrane was measured. Also, a biofilm was collected from the rest of the ring and the other half of the reverse osmosis membrane in the same manner by using a swab to be suspended in the distilled water, and then a biofilm mount of each of the collected liquids was measured. A biofilm amount average value of each of the collected liquid of the ring and the reverse osmosis membrane was calculated.

The biofilm amounts of the collected liquids shifted below the detection limit at an early stage of the measurement, but the biofilm amount of the reverse osmosis membrane started to increase at a speed of about 3.5 pg/cm²/day from the day 35 of the operation. The biofilm amount of the Teflon (registered trademark) ring started to increase from the day 47 of the operation, which was later than the reverse osmosis membrane. An increase speed was about 3.5 pg/cm²/day which was the same as the case of using the reverse osmosis membrane as the material. As a result of the same experiment conducted in another plant for treating water having quality which is a little worse, the biofilm formation speeds and the biofilm amounts shifted by an identical degree irrespective of the material, and the biofilm amount of the reverse osmosis membrane started to increase at 50 pg/cm²/day from the day 7 of the operation to reach to 1,500 to 1,750 pg/cm² on the day 42 of the operation. As a separate study in the same manner as in the description of the above Non-Patent Document, it was confirmed that results obtained by using glass and Teflon (registered trademark) as the materials for the biofilm formation did not differ from each other. From the above results, it was found that the reverse osmosis membrane is more useful for the membrane surface monitoring in reverse osmosis membrane filtration plant than glass and Teflon (registered trademark) since the reverse osmosis membrane has a superior responsiveness, enables to obtain evaluation result more rapidly, and enables to shorten the measurement time. Therefore, among the base materials providing the surface for biofilm amount measurement, the reverse osmosis membrane which is used for the reverse osmosis membrane filtration process is preferred since the reverse osmosis membrane enables more rapid feed back control of the operation conditions.

Although the above description is based on the water quality evaluation experiment results, the use of the reverse osmosis membrane as the biofilm formation base material is considered preferable in view of the following results. On the surface of the reverse osmosis membrane, physical properties such as a surface electrical potential change depending on various solution chemical environments such as a salt concentration in reverse osmosis membrane supply water, pH, treatment in pre-treatment unit, types and concentrations of chemicals added at upstream of reverse osmosis membrane module in reverse osmosis membrane filtration unit, and the like, and responses to the environmental changes of the reverse osmosis membrane have fidelity as compared to the cases of using other materials. For example, in the case of using an acidic (pH 3) chemical in a membrane filtration plant using a polyamide reverse osmosis membrane, since the polyamide reverse osmosis membrane has carboxylic acids and amines as functional groups, all carboxylic acids lose their electric charges while all amines become ammonium ions, i.e. obtain positive electric charges, at pH 3, so that the polyamide reverse osmosis membrane is positively charged as a whole. In the case of using an alkaline (pH 10) chemical, the polyamide reverse osmosis membrane is negatively charged as a whole. In the case of using glass or Teflon (registered trademark) as the material, due to the absence of a functional group which is capable of undergoing dissociation on the surface, the surface electrical potential hardly changes with the change in pH. Such characteristics have influence on a deposition process of cells to the film at an early stage of the biofilm formation, deposition/detachment of biofilm when bactericide is used, recovery property after cleaning, and the like. By using the reverse osmosis membrane which is used in the reverse osmosis membrane filtration process as the material for the biofilm formation base material, it is possible to reproduce a state of the membrane surface of the reverse osmosis membrane module, such as characteristics including the micro-unevenness in addition to the above-described surface chemical characteristics, and, therefore, the reverse osmosis membrane has the advantage of higher reliability as the material for monitoring the state of the reverse osmosis membrane module than the other materials. Since the reverse osmosis membranes vary in composition, surface characteristics, and responsiveness such as the surface electrical potential with respect to pH depending on the type, it is preferable to use the reverse osmosis membrane of which the type is the same as that used in the plant. For example, in the plant using the low fouling property reverse osmosis membrane, it is preferable to use the low fouling property reverse osmosis membrane as the biofilm formation base material.

In the case of using the reverse osmosis membrane, the following advantages are achieved in addition to the effects of rapid measurement, improved responsiveness, and enhanced reliability. Since the reverse osmosis membrane is soft, it is possible to house the reverse osmosis membrane in flow containers of various sizes and shapes. Particularly, the reverse osmosis membrane makes it easy to deal with restrictive conditions of flow containers such as a water flow amount to the flow container and on-cite availability. Furthermore, (1) it is possible to roll the reverse osmosis membrane when housing the reverse osmosis membrane in the case of using the column which is suitable from the standpoint of uniform water flow and universality. Since the reverse osmosis membrane has resilience, it is possible to house the reverse osmosis membrane in the column with a satisfactory strength without using any fixing tools by maintaining a functional surface as the inner side. Since it is possible to fix the reverse osmosis membrane remarkably conveniently, safety is ensured as compared to the case of using a clip and an adhesive agent which are subject to detachment due to rust and deterioration. (2) After cutting off a part of the base material pulled up with tweezers or the like, it is possible to perform the measurement after returning the rest of the base material. It is possible to adjust an area of the base material to be evaluated depending on a degree of the biofilm and the like. (3) It is possible to evaluate a filtration property and the like by taking out the reverse osmosis membrane by cutting off. The advantages of (1) to (3) and the like are added by using the reverse osmosis membrane.

In the case of housing the reverse osmosis membrane in the column, the reverse osmosis membrane is rolled in such a manner to allow the evaluation water to flow on the surface of the separation function layer (at the raw water side during filtration) and is pushed into the flow container along the inner wall of the flow container. An area for the housing in the case of using a cylindrical flow container having an inner diameter of D and a height of H is preferably the size smaller than the size of a circumference of a circle having the inner diameter D x a height equal to or less than H in view of reducing a useless part, although a little overlapping may be tolerated.

A frequency for biofilm amount measurement may be decided depending on the situation, and the measurement may be carried out everyday or once in a week. An interval may be irregular or regular. Since the reverse osmosis membrane module supply water and the non-permeated water are waters which has been subjected to the pre-treatment, remarkably high biofilm formation speed which can be caused when flowing a sewage water immediately after biotreatment or flowing a contaminated river water will hardly or never occur. Therefore, when the measurement frequency is made shorter than a day, it is not so effective since the information is not increased for the labor of the increased work. Note that this is not applied when an effect of sterilization or a cleaning agent is evaluated in a short time before and after the action, and such evaluation may be carried out at the interval shorter than a day. In turn, since effectiveness of the monitoring is degraded when the measurement frequency is too long, it is necessary to perform the measurement at least once in six months, and the measurement is more preferably carried out once a month or more, still more preferably once a week or more.

The biofilm contains bacteria performing life activity, inactivated bacteria, metabolism products thereof such as polysaccharides and proteins, shells thereof, and molecules such as nucleic acids. Therefore, various methods are considered as a method for biofilm quantitation, and it is possible to quantitate the biofilm by way of a protein, a sugar, a nucleic acid, total cell number of bacterium, ATP, or the like. Among these, the ATP measurement method is particularly preferred since it is excellent in sensitivity, convenience, and rapidness and since portable kits, reagents, and the like for the ATP measurement are commercially available.

Since a device such as an absorptiometer or a fluorescence analyzer is required and a strongly alkaline, strongly acidic, or mutagenic reagent is used for the quantitation of the protein, sugar, and nucleic acid, such quantitation is hardly a method that can be carried out conveniently and rapidly on site. Also, an agar culture method wherein a formed biofilm is suspended in a liquid, and the suspension liquid is used for counting cultured bacteria as colonies has been known. However, since only the cultured bacteria are counted in the agar culture method, the method has a problem of not capable of evaluating a total number of organisms contained in the biofilm. As an analysis result of environmental bacteria systems based on molecular biological gene information, there is a report that a correlativity between the colony counting result and the biofilm amount is low or null for the reasons such as a low proportion of bacteria which can be separated and cultured by the agar culture method in the bacteria contained in the biofilm. Also, the agar culture method has problems that the method requires many devices and equipment for evaluating the biofilm, and that the culture requires days, which makes it difficult to rapidly perform the evaluation. A method of counting the cell number directly by using a microscope may be considered, but it is difficult to disperse the bacteria in a biofilm, and the counting itself is a remarkably burdensome work.

In the ATP measurement method, ATP (adenosine-5'-triphosphate) produced by all organisms as an energy substance for life activity is extracted from bacterial cells, and the extracted ATP is caused to emit light by using luciferase which is a luminous enzyme of a firefly to measure luminosity of the luminosity (RLU: relative light unit). Since the luminosity is proportional to the ATP amount, it is possible to evaluate the bacteria amount through the measurement of the luminosity. The reaction proceeds in the presence of ATP serving as a base, luciferine, oxygen, luciferase, and coenzyme magnesium ions to generate the light. A measurement time is short, namely a several minutes, and measurement reagent kits are commercially available. Also, luminometers having a high detection sensitivity that enables detection at a concentration of 1 pg/cm² and is excellent in mobility as being portable are commercially available. Since ATP is a substance related to life activity, it is possible to determinably evaluate whether or not the fouling and the film formation has a causal relation to the biofilm formation, i.e. whether or not the fouling and the film formation is based on the bacteria activity. The ATP measurement method enables a highly sensitive, convenient, and rapid evaluation on the site of the biofilm formation trouble and does not require experiments in a Laboratory. Also, the ATP measurement method is reduced in bias such as that accompanying the culture in the agar culture method, thereby enabling highly reliable biofilm amount evaluation (Japanese Patent No. 3252921).

A method for recovering and dispersing ATP contained in a biofilm on a base material surface is not particularly limited, so long as the method is a quantitative method enabling a high recovery rate, and it is preferable to select an efficient method. A method of adding an ATP extraction reagent to a liquid obtained by immersing a hard base material such as a collected Teflon (registered trademark) ring or glass ring into pure water and then dispersing the biofilm piece in the pure water by ultrasonic fracturing, but it has been found that an extraction efficiency attained by the ultrasonic fracturing is not satisfactory and is further degraded in the case of using the reverse osmosis membrane which is optimal as the biofilm formation surface. Accordingly, it has been found that a method wherein a biofilm deposited on a removed base material is collected by using a wiping tool, and then the wiping tool is immersed in a pure water to disperse the biofilm piece attached to the wiping tool is most preferable as a recovery method which is capable of reliably detaching the biofilm that has firmly attached to the material and enables the measurement without influencing on a surviving rate of the bacteria. Under ultrasonic fracturing conditions which are less influential on the surviving rate reduction, the biofilm collection efficiency is low in various plant equipments, and a considerable amount of the biofilm is collected by using a wiping tool from a surface that has been subjected to the ultrasonic fracturing in many cases.

As the wiping tool, a swab is particularly preferred from the reasons such as that the swab enables to conduct a small scale analysis as well as to feel a degree of biofilm collection by hand, and the swab is usable for dispersing the biofilm and mixing the liquid in addition to the biofilm collection, and ATP-free clean swabs are commercially available. In the case of the wiping method, it is unnecessary to use huge equipment on the site of the reverse osmosis membrane filtration plant such as a sea water desalination plant, and no electrical outlet is required. Also, the method has the advantage of making it possible to easily conduct a concentration operation which is required for a high sensitivity measurement by adjusting an amount of a liquid used for suspension with respect to an area to be wiped.

In a reverse osmosis membrane filtration plant, three Teflon (registered trademark) rings (outer diameter 18 mm, inner diameter: 14 mm, height: 15 mm) were collected by using tweezers from a flow container after 2 weeks from the start of water flow, and the ultrasonic fracturing and the method of the present invention employing swab-wiping were compared to each other. In the measurement employing ultrasonic fracturing, one of the Teflon (registered trademark) rings was immersed perfectly into 10 ml of a pure water and is subjected to ultrasonic treatment at 39 kHz for 2 to 10 minutes, thereby preparing a biofilm suspension liquid. In the method of the present invention performing wiping with a swab, an area of about 17 cm² of another one of the Teflon (registered trademark) rings including an outer surface and an inner surface and excluding upper and lower sections was wiped by using a sterilized swab, and a biofilm was collected as being suspended in 10 µl of a pure water. By using 100 ml of each of the biofilm suspension liquids obtained by the biofilm collection/fracturing methods, an ATP deposition amount on the ring inner and outer surfaces was measured by the ATP measurement described later in this specification. The luminosity detected with the ultrasonic fracturing was 100 RLU or less irrespective of the treatment time, which made quantitation difficult. The luminosity detected with the swab-wiping method was about 890 RLU which enabled measurement and quantitation. Also, an area of about 17 cm² of the remaining Teflon (registered trademark) ring was wiped by using a sterilized swab, and the biofilm was suspended into 1 ml of a pure water to conduct the same measurement. RLU detected by this method was 8,500 which proved that it is possible to perform highly sensitive measurement by reducing the liquid amount.

Although the ATP measurement of the suspension liquid is not particularly limited, a commercially available reagent kit is preferably used for easiness in the preparation. Also, a luminometer is required for the luminosity measurement, and luminometers which are mobile as being compact and battery-charged and not requiring any electric outlet and provided with a high sensitivity detector having the similar function as a stationary type are commercially available and recommendable. Examples of the kit including all the reagents required for the measurement include CheckLite (registered trademark) 250 Plus (Cord 60312; product of Kikkoman Corp.), and examples of the mobile spectrometer include Lumitester (registered trademark) C-100 (Cord 60907; product of Kikkoman Corp.). The reagent kit includes a luminosity reagent containing luciferase (luminous enzyme), a luminosity reagent solution containing a phosphoric acid buffer solution, a reagent containing a surfactant for extracting ATP from cells, and the like.

Also, for dividing the reagent, any tool may be used, so long as the tool enables accurate and correct quantitation of a small liquid amount, and examples thereof include Pippetman (registered trademark; product of Gilson, for 1000 µl and 200 µl) and the like. The tools to be used for handling samples and reagents are sterilized in order to prevent ATP contamination of the substances other than the samples. A chip used for Pippetman (registered trademark) is sterilized in an autoclave in advance (121°C for 15 minutes).

The pure water used for dispersing the biofilm is preferably free of ATP (10 ng/l or less), such as distilled water, reverse osmosis membrane purified water immediately after purification, ion exchange water immediately after purification, commercially available ultra pure water, and the like, since such pure water reduces errors in the measurement due to impurities. Commercially available disposable distilled water is preferably used in view of its convenience. Also, tap water can be used, so long as it is sterilized in an autoclave.

Any containers such as a tube for containing the samples can be used, so long as the container is clean and is not contaminated with ATP, and both of a sterilized container and a non-sterilized container after an autoclave treatment can be used. Also, for the Lumitester (registered trademark) C-100, Lumitube (registered trademark) (product of Kikkoman Corp., for 3 ml) which is an ATP-free cell used for luminosity quantitation is commercially available, and the cell may be used for all of the luminosity quantitation. A chip, a tube, and containers once used is preferably discarded, but they can be reused after cleaning and sterilization.

A suspension liquid is obtained by immersing a swab used for wiping off a biofilm deposited on a reverse osmosis membrane into pure water dispensed to a measurement tube for 1 to 2 seconds, followed by stirring. This operation can be carried out once, but, in order to disperse and suspend the wiped biofilm as much as possible from the swab for the purpose of obtaining an accurate value, it is preferable to immerse and disperse the swab which has been dispersed and suspended into the first liquid into another liquid and to repeat the operation for several times since the thus-obtained values are correct and the values themselves are stabilized. Although it depends on an area to be wiped with the swab and a liquid amount, in the case of wiping an area of about 15 cm² with a swab and dispersing into 1 ml of water, obtained values are stabilized by three operations, and a value obtained by performing the operation once is about a half of that obtained by the three operations.

The luminosity measurement for the prepared suspension liquid is not particularly limited, so long as the measurement is accurately carried out, and, when a kit is used, the measurement can be carried out in accordance with manufacture's instructions of the kit. For example, when using CheckLite (registered trademark) 250 Plus and Lumitester (registered trademark) C-100, 100 µl of the suspension liquid is dispensed in each of measurement tubes, and 100 µl of the luminous reagent is added to each of the measurement tubes at a timing of 20 seconds after the suspension liquid dispensation, followed by measurement of luminosity by using Lumitester (registered trademark) C-100 (product of Kikkoman Corp.). In advance of the measurement, the luminosity detected by using a liquid having a known ATP concentration is evaluated to obtain a correlation expression between the ATP concentration and the luminosity. Alternatively, correlation expression data provided by the manufacture can be used. After the detection of the luminosity of the biofilm suspension liquid, the luminosity is converted into an ATP amount by using the correlation expression. An ATP amount (pg/cm²) per unit area on the wiped surface is calculated by using the area of the collected biofilm formation surface, the volume of the liquid of the suspended distilled water, and the converted ATP amount. In the case where the samples were diluted, the dilution ratio must also be considered.

Although the evaluation method employing ATP measurement is an excellent method, the method has a problem that luciferase which is the enzyme used for the measurement is inhibited greatly by a salt to deteriorate the detection sensitivity in the presence of a trace of chloride ions. Relative ratios of the luminosity at a salt concentration of 1%, 0.5%, and 0.1 % with respect to the case of not containing chloride ion are about 30%, about 50%, and about 85%. Therefore, a liquid obtained by suspending a biofilm formed under a flow of sea water into desalinated water is influenced by the inhibition, and it is necessary to eliminate the influence of the salt inhibition for accurate evaluation irrespective of a process step or a point in a plant.

A method of reducing the salt concentration by filtrating the biofilm suspension liquid for bacteria removal and then suspending again the filtrated biofilm suspension liquid into pure water not containing salt may be considered. However, since the filtration method requires a filtration equipment and the step of suspending the biofilm again after the filtration, the preparation and the measurement operation are complicated and time consuming. The filtration method has a problem that bacteria and ATP can remain on the film after the filtration depending on the type of the biofilm, and influence exerted by this problem is undesirably large in the case where the biofilm amount is small. As another method, an inner reference method wherein a known ATP solution is added to a sample to detect the luminosity in an inhibited state, and then converting the sample ATP concentration into an ATP concentration without inhibition has been proposed. However, in the case of measuring samples which are obtained in different points and differ in salt concentration, such as a case in a process in a sea water desalination plant, with the above method, since a sample to which a known ATP solution is added under the inhibited state is required for each of the samples, the total number of measurement samples is increased (at least doubled), thereby making the measurement complicated and time consuming.

As a result of the extensive research, it has been found that, based on a correlation expression relating to influence to be exerted on the luminosity by a salt concentration, which is obtained in advance of measurement and by measuring a salt concentration of a biofilm suspension liquid by using an electroconductivity meter, it is possible to rapidly and conveniently correct a true ATP concentration from which the influence of salt inhibition is eliminated. The electroconductivity measurement method includes a sensor dipping type and a flat sensor type in which the liquid is dripped, and the flat sensor type is preferably used in the case where the biofilm suspension liquid amount is small in a measurement using a small liquid amount since it is possible to conduct the measurement by dripping a very small amount of the sample with the flat sensor type. Examples of a device to be used for the flat sensor type for dripping a liquid include Twin Cond EG-173 (product of HORIBA, Co., Ltd.) having an embedded battery and the like. The correlation expression between a salt concentration and electroconductivity is obtained based on electroconductivity (mS/cm) which is detected by placing about 200 to 250 µl of artificial sea water or a salt solution of a known concentration on the flat sensor for a few minutes. Electroconductivity of the biofilm suspension liquid is detected in the same manner to calculate a salt concentration based on the electroconductivity (mS/cm), and then it is possible to evaluate an accurate ATP concentration of the suspension liquid from which the influence by salt inhibition is eliminated by the correlation expression of the inhibition exerted by the salt concentration on the luminosity.

In the case of evaluating a biofilm amount under a flow of raw water containing a salt as in the case of evaluating biofilms by employing the above-described best mode of biofilm evaluation method, wherein (1) each of the biofilms is detached and collected from a biofilm formation material by wiping-off using a swab or the like, (2) the swab is immersed and dispersed into a small amount of desalinated water to enable a high RLU amount measurement, (3) a biofilm amount of the dispersion liquid is evaluated by the ATP measurement using a portable luminometer, and (4) evaluating the biofilms formed during processes in a sea water desalination plant, it is possible to conveniently and rapidly measure the biofilm amounts on site with the use of a small amount of a sample and a small amount of a reagent and a base material and without using any electric outlet for employing the method satisfying all of the requirements for the correction of influence of the salt concentration inhibition by using the liquid-dripping flat sensor type electroconductivity measurement device.

As a result of measurement of biofilm amounts on surfaces of three reverse osmosis membranes of a reverse osmosis membrane module in which biofouling has occurred, ATP amounts per unit area were about 1,000 to 2,000 pg/cm². An increase in pressure loss was confirmed in the plant when an amount of a biofilm formed under flow of reverse osmosis membrane supply water and after practicing the present invention exceeds 1,500 pg/cm².

As a result of measurement of biofilm amounts on surfaces of 5 sample reverse osmosis membranes of a reverse osmosis membrane module with which a pressure loss stably shifted during a certain period of time longer than three months of operation, each of ATP amounts was 200 pg/cm² or less. A pressure loss of a plant in which a film surface monitoring amount was controlled to 200 pg/cm² or less shifted stably. From the above findings, the inventors have reached a guideline that the ATP amount is managed to be 200 pg/cm² or less in the case where a biofilm is measured via the ATP measurement method. In the case where the ATP amount temporarily exceeds 200 pg/cm² for one or two days in a week, it is considered that a similar effect is achieved by controlling the plant operation method in such a manner that the ATP amount per unit area of the biofilm formation base material 55 is kept to 200 pg/cm² or less for five days or more in a week, and this guideline may be used based on this concept.

Hereinafter, one example of a method of feeding back the evaluation result to a reverse osmosis membrane filtration plant operation is described, but the method is not limited thereto. The feed back method is a method of appropriately correcting a method for operating a reverse osmosis membrane filtration plant including changing operation conditions of a pre-treatment unit before occurrence of a pressure loss or a permeated water reduction and changing sterilization in the reverse osmosis membrane filtration unit and a recovery rate of the reverse osmosis membrane module by providing a biofilm formation evaluation device in a reverse osmosis membrane filtration unit and quantitatively monitoring a bacteria amount on a membrane surface of the reverse osmosis membrane module during desalination. Also, another feed back method is chemical cleaning of the reverse osmosis membrane module by using a cleaning agent, which is carried out after stopping the filtration operation of a part or whole of the reverse osmosis membrane modules in response to the monitoring result.

A specific example in the case of controlling sterilization conditions of the reverse osmosis membrane filtration unit based on the evaluation result is described. During desalination in a reverse osmosis membrane filtration plant, results of biofilm amounts detected by the biofilm formation evaluation device are plotted. In the case where the biofilm amounts are being increased and approaching to the ATP amount of 200 pg/cm² which is the management standard or in the case where the ATP amount has already exceeded 200 pg/cm², intensity of conditions for currently carried out sterilization is changed since it is considered that a biofilm formation suppression effect by the sterilization conditions currently employed in the plant is weak. Examples of a method for changing the sterilization intensity include a change in frequency of bactericide addition, a change in one sterilization period, a change in concentration of bactericide to be added, a change in type of bactericide, and the like, and these changes may be carried out alone or in combination thereof. In the case where the ATP amount is considerably low as compared to 200 pg/cm² which is the management standard, namely 20 pg/cm² or less, the intensity of the sterilization conditions may be weakened or the bactericide addition may be temporality stopped since it is considered that the sterilization conditions are too intense to waste the bactericide when the ATP amount is considerably low.

In the case of changing the bactericide and the sterilization method, results obtained before and after the changes in bactericide and sterilization method are compared to each other to judge the effects in the case where one evaluation device is used. In the case where plural evaluation devices are provided and sterilization conditions are independently and simultaneously compared and evaluated, it is possible to obtain an operation guideline more rapidly, and this method is particularly suitable for starting up a plant operation.

The biofilm amount measurement and the sterilization condition change carried out in response to the measurement results may be conducted manually or by automation.

Control of reverse osmosis membrane filtration unit cleaning conditions based on the evaluation result is carried out in the same manner as in the above-described sterilization condition control. Other examples of a method for controlling the method for operating a reverse osmosis membrane filtration plant include a change in intake point of the intake pipe 1 in an intake unit, a change in hypochloric acid solution addition conditions, a change of the filtration device in the pre-treatment unit, a change in flocculation separation conditions, and the like.

### Examples

Hereinafter, the present invention is described specifically based on, but not limited to, Examples and Comparative Examples.

### Example 1

In plant P1, sea water subjected to a flocculation/sand filtration treatment was used as raw water, and two systems (hereinafter referred to as system A and system B) of sea water desalination experiment devices each of which is formed of a bactericide inlet, a high pressure pump, a crosslinked aromatic polyamide-based reverse osmosis membrane module having a diameter of 4 inches, and the like were provided.

In the system A, an evaluation water which was collected from a branching pipe provided on a piping at a downstream of the bactericide inlet and an upstream of the high pressure pump was supplied to a biofilm formation evaluation device (two cylindrical columns each having an inner diameter of 2.7 cm and a length of 60 cm, the cylindrical columns are serially connected with a hose) at a flow rate of 7.21/min by using a blade hose. In the biofilm formation evaluation device, a reverse osmosis membrane which is used for the reverse osmosis membrane module was housed as a base material, and the reverse osmosis membrane was cut by 4 to 4.5 cm for a sampling which is conducted once in two weeks to perform an ATP measurement of an amount of a biofilm on the reverse osmosis membrane.

A bactericide X was added from the bactericide inlet once a week and for one hour for sterilization. In the system B, the biofilm evaluation device was not provided, and sterilization was carried out in the same manner as in the system A.

The portable analysis device Lumitester (registered trademark) C-100 (product of Kikkoman Corp.) and the dedicated reagent kit CheckLite 250 Plus (product of Kikkoman Corp.) were used for the ATP measurement. Pippetman (registered trademark) (product of Gilson, for 1000 µl and 200 µl) and a chip subjected to an autoclave treatment (121°C for 15 minutes) were used for dispensing the sample and the reagents, and Lumitube (registered trademark) (product of Kikkoman Corp., for 3 ml) for measurement was used as a container for dispensation and measurement. The chip and the tube were disposed after use.

The ATP measurement of the biofilm amount on the cut-off reverse osmosis membrane Was carried out in the manner described below. A deposit on the surface of the reverse osmosis membrane was collected by wiping off the deposit using a sterilized swab and then suspending the deposit into 1 ml of distilled water (Otsuka Pharmaceutical Co., Ltd.; for injection use; 20 ml/sample). A half of the cut-off reverse osmosis membrane surface, which was about 15 cm², was wiped off by using one swab. After the biofilm wiping off with the swab, 1 ml of distilled water (Otsuka Pharmaceutical Co., Ltd.; for injection use; 20 ml/ample) was dispensed in each of three measurement tubes (Lumitube (registered trademark) (product of Kikkoman Corp., for 3 ml) in order to suspend in 3 grades. The swab used for wiping off the biofilm was immersed into 1 ml of the water in the first tube for one to two minutes, followed by careful stirring to obtain a suspension, and then the swab was immersed and stirred in the second and third tubes to prepare suspension liquids of three grades.

After 100 µl of each of the prepared suspension liquids was dispensed in another Lumitube (registered trademark) for measurement, 100 µl of the ATP reagent was added thereto, and, 20 seconds thereafter, 100 µl of the luminous reagent was added thereto to measure luminosity by using Lumitester (registered trademark). Also, about 200 µl was separated from about 900 µl of each of the remaining suspension liquids from which 100 µl had been separated for the luminosity measurement, and electroconductivity of each of the suspension liquids was measured by using a compact electroconductivity meter Twin Cond EG-173 (product of HORIBA, Co., Ltd.).

After completion of the measurement, a salt concentration was calculated from the electroconductivity of each of the three grades of suspension liquids, and a luminosity inhibition rate at the salt concentration was calculated from a correlation expression of inhibition of the salt concentration and the luminosity. Next, based on the correlation expression of the ATP concentration and the luminosity, an ATP concentration was calculated. The ATP amounts of the three grades of suspension liquids were added up to calculate a total ATP amount in the sample deposit. By dividing the ATP total amount by the wiped area, an ATP amount per unit surface of the biofilm formation base material was detected. The measurement was carried out by using n = 2, and an average value was calculated.

For about a month after the start of experiment, a pressure loss was not increased in each of the systems A and B, and the reverse osmosis membrane filtration operation was stably performed. An ATP concentration on the surface provided on the biofilm evaluation unit of the system A was about 100 pg/cm² in each of three continuous detections, and the ATP concentration started to increase sharply to 250 pg/cm², 340 pg/cm², and 480 pg/cm² after 1.5 months passed.

Therefore, the bactericide X was added once a day for one hour in the system A to intensify the sterilization conditions. The sterilization conditions in the system B were not changed since the pressure loss did not increase in the system B.

About one month later the change in sterilization conditions of the system A, the pressure loss of the system B started to increase to ultimately give a change in pressure loss of 0.5 MPa. During the pressure loss increase, the pressure loss in the system A shifted constantly and did not increase. The biofilm deposition amount was 200 pg/cm² or less.

### Example 2

The present invention was practiced in plant P2 which was formed of a bactericide inlet, a high pressure pump, a crosslinked aromatic polyamide-based reverse osmosis membrane module having a diameter of 4 inches, and the like, wherein sea water subjected to a flocculation/compression floatation filtration treatment and a sand filtration treatment was used as raw water. An evaluation water was flowed at 2 L/min from a branching pipe provided at a downstream of the bactericide inlet to a biofilm formation evaluation device A (a cylindrical column having an inner diameter of 1.4 cm and a length of 60 cm). The evaluation water was also flowed at 2 L/min from a branching pipe provided at an upstream of the high pressure pump to a biofilm formation evaluation device B (a cylindrical column having an inner diameter of 1.4 cm and a length of 60 cm). In each of the biofilm formation evaluation devices, a reverse osmosis membrane which was used for the reverse osmosis membrane module was housed as a base material, and the reverse osmosis membrane was cut by 4 to 4.5 cm for a sampling which was conducted once a week to perform an ATP measurement of an amount of a biofilm on the reverse osmosis membrane. The ATP measurement was carried out in the same manner as in Example 1. A bactericide X was added from the bactericide inlet once a week and for one hour to conduct sterilization.

As a result of operation for 37 days, biofilm deposition amounts in the biofilm formation evaluation device A provided at the upstream of the bactericide inlet were 2.5 pg/cm², 24 pg/cm², 67 pg/cm², and 136 pg/cm². Biofilm deposition amounts in the biofilm formation evaluation device B provided at the downstream of the bactericide inlet were 2 pg/cm², 22 pg/cm², 11 pg/cm², and 46 pg/cm². In view of the fact that the deposition amount in the biofilm formation evaluation device B shifted at the lower levels, it was confirmed that the addition of the bactericide X has the effect of the biofilm deposition suppression. The operation was further continued for about two months, and a pressure loss of the membrane module shifted constantly to enable stable operation of the plant until the operation was stopped.

### Example 3

The present invention was practiced in plant P3 which was formed of a bactericide inlet, a high pressure pump, a crosslinked aromatic polyamide-based reverse osmosis membrane module having a diameter of 4 inches, and the like, wherein sea water subjected to a sand filtration treatment was used as raw water. An evaluation water was flowed at 5.5 L/min at an upstream of the high pressure pump and from a branching pipe provided at a piping at an upstream and a downstream of the bactericide inlet to each of a biofilm formation evaluation device A (the water was taken at the upstream of the bactericide addition point) and a biofilm formation evaluation device B (the water was taken at the downstream of the bactericide addition point). In each of the biofilm formation evaluation devices, a cylindrical column having an inner diameter of 2.7 cm and a length of 60 cm was used as a flow container. A bactericide X was added once a week and for 30 minutes, but, due to an increase in pressure loss of the membrane module that exceeded 0.2 MPa in a month, it was necessary to clean the reverse osmosis membrane module frequently.

Teflon (registered trademark) rings were used as a base material, and two Teflon (registered trademark) rings were taken out once a week to perform an ATP measurement of an amount of a biofilm on surfaces of the Teflon (registered trademark) rings.

As a result of operation for 50 days, biofilm deposition amounts in the biofilm formation evaluation device A were 390 pg/cm², 912 pg/cm², 1,237 pg/cm², and 2,719 pg/cm². Biofilm deposition amounts in the biofilm formation evaluation device B to which the bactericide was flowed were 111 pg/cm², 784 pg/cm², 1,490 pg/cm², and 3,228 pg/cm².

The frequency of the bactericide addition was increased to twice a week since intensity of the bactericide X was considered to be weak, whereby the biofilm formation speed was increased by about 20% in the system to which the bactericide X was added as compared to the system to which the bactericide X was not added.

In view of the above results, it was considered that the addition of the bactericide X did not have the effect of the biofilm deposition suppression or more likely destabilize the plant operation.

In view of the result, the operation was changed in such a manner that the reverse osmosis membrane modules of the reverse osmosis membrane filtration unit of the plant were cleaned as being immersed into a cleaning agent B overnight. After the change, the biofilm amount in the biofilm formation evaluation device B in which an operation same as the chemical cleaning was carried out was kept to 200 pg/cm² or less, and the pressure loss of the reverse osmosis membrane module was reduced and then shifted constantly.

### Example 4

The present invention was practiced in plant P4 which was formed of a bactericide inlet, a high pressure pump, a crosslinked aromatic polyamide-based reverse osmosis membrane module having a diameter of 8 inches, and the like, wherein sea water subjected to a microfiltration treatment was used as raw water. No bactericide was added to this plant.

An evaluation water was flowed to a biofilm formation evaluation device A at 2 L/min from a branching pipe provided at an upstream of the high pressure pump and to a biofilm formation evaluation device B from a branching pipe provided on a reverse osmosis membrane non-permeated water line. As a flow container of each of the biofilm formation evaluation devices A and B, a cylindrical column made from polycarbonate and having an inner diameter of 1.4 cm and a length of 60 cm was used.

A reverse osmosis membrane whose type is the same as that used for the reverse osmosis membrane module was housed as a biofilm formation base material, and the reverse osmosis membrane was cut by 8 to 9 cm for sampling which was conducted once a month to perform an ATP measurement of an amount of a biofilm on a surface of the reverse osmosis membrane by way of the ATP measurement which was carried out in the same manner as in Example 1.

As a result of operation for 120 days, biofilm deposition amounts in the biofilm formation evaluation device A were 0.6 pg/cm², 0.7 pg/cm², 14.2 pg/cm², and 71 pg/cm². Salt concentrations of three grades of suspension liquids into which the biofilm was dispersed in the biofilm formation evaluation device A were from 0.05% to 0.1%, and the deposition amounts were calculated through conversion of the inhibition rates due to the salt concentrations.

Biofilm deposition amounts in the biofilm formation evaluation device B were 0.6 pg/cm², 5.7 pg/cm², 78 pg/cm², and 85 pg/cm². Salt concentrations of three grades of suspension liquids into which the biofilm was dispersed in the biofilm formation evaluation device B were from 0.2% to 0.5%. During the operation, a pressure loss of the reverse osmosis membrane module shifted stably without being increased, and the plant was capable of stable operation.

As the results of the biofilm formation evaluation devices A and B, it is considered that it is possible to realize stable plant operation without changing the operation conditions including the bactericide addition, and no operation control was performed. In actuality, the plant was stably operated further for a month.

While the present invention has been described in detail and with reference to specific embodiments thereof, it will be apparent to one of skill in the art that various changes and modifications can be made therein without departing from the spirit and scope thereof.

This application is based on Japanese application No. 2006-259286 filed on September 25, 2006.

### INDUSTRIAL APPLICABILITY

The present invention provides a method for operating a reverse osmosis membrane filtration plant and a reverse osmosis membrane filtration plant suitably used for obtaining fresh water by desalinating sea water and saline water with a reverse osmosis membrane or obtaining reusable water by purifying treated sewage, treated wastewater and industrial wastewater.

## Claims

1. A method for operating a reverse osmosis membrane filtration plant having a raw water intake unit, a pre-treatment unit, and a reverse osmosis membrane filtration unit having a reverse osmosis membrane module in this order, said method comprising:
disposing a reverse osmosis membrane used as a biofilm formation base material in a flow container, wherein the reverse osmosis membrane is a rectangular sheet and is rolled in such a manner that a separation function layer surface serves as the inner side and the rolled reverse osmosis membrane is pushed into the flow container along an inner wall of the flow container wherein the inner side is the part on which the evaluation water inside the flow container flows,
so that reverse osmosis membrane module supply water sampled from piping branching at upstream of the first reverse osmosis membrane module in the reverse osmosis membrane filtration unit and/or reverse osmosis membrane module non-permeated water sampled from piping branching at downstream of the reverse osmosis membrane modules through which the reverse osmosis membrane module non-permeated water passes, are/is flowed on a surface of a separation function layer of the reverse osmosis membrane sheet used as a biofilm formation base material housed in the flow container,
and so that the reverse osmosis membrane module supply water and/or the reverse osmosis membrane module non-permeated water are/is not filtered by the reverse osmosis membrane sheet used as the biofilm formation base material housed in the flow container but under conditions that the reverse osmosis membrane module supply water and/or the reverse osmosis membrane module non-permeated water are/is flowed at a linear speed equal to a non-permeated water linear speed in the reverse osmosis membrane module of the reverse osmosis membrane filtration unit and equal to an average linear speed on the surface of the reverse osmosis membrane module on which the non-permeated water is flowed;
evaluating a biofilm amount on the reverse osmosis membrane sheet used as the biofilm formation base material housed in the flow container at a frequency of from once a day to once in six months; and
controlling the method for operating a reverse osmosis membrane filtration plant based on results of the evaluation,
wherein the reverse osmosis membrane used as the biofilm formation base material is made of the same material as a reverse osmosis membrane which is used in the reverse osmosis membrane filtration plant.

2. The method for operating a reverse osmosis membrane filtration plant according to claim 1, wherein the biofilm amount on a surface of the reverse osmosis membrane sheet used as the biofilm formation base material is evaluated by placing the reverse osmosis membrane sheet which falls into a size of a circumference of a circle having an inner diameter of D or less and a height of H or less with bending in a cylindrical flow container having an inner diameter of D and a height of H so as to orient a surface faced to the raw water during filtration to an inner side, and by cutting a part of the reverse osmosis membrane sheet fixed in the cylindrical flow container by a physical resilience in a direction of the circumference.

3. The method for operating a reverse osmosis membrane filtration plant according to claim 1, wherein the control on the operation method of the reverse osmosis membrane filtration plant is control on sterilization conditions or cleaning conditions of the reverse osmosis membrane filtration unit, and the reverse osmosis membrane used as the biofilm formation base material is treated under similar control conditions.

4. The method for operating a reverse osmosis membrane filtration plant according to claim 1, wherein the biofilm amount is evaluated based on ATP (adenosine-5'-triphosphate), and the plant operation method is controlled so as to achieve an ATP amount of 200 pg/cm² or less per unit surface.

5. The method for operating a reverse osmosis membrane filtration plant according to claim 1, wherein the method is a method for evaluating the biofilm amount formed in raw water having a salt concentration of 3% or more by the ATP measurement method, said method comprises:
(a) suspending the biofilm collected from the reverse osmosis membrane used as the biofilm formation base material into pure water;
(b) quantifying a luminosity of the suspension liquid of (a) by using a luciferase reaction;
(c) measuring a salt concentration of the suspension liquid of (a);
(d) calculating an ATP amount of the suspension liquid of (a) by using a correlation equation of a salt concentration inhibition to be exerted on a quantitation system using the luciferase reaction, a correlation equation of the ATP concentration and the luminosity in the absence of the inhibition, and results of (b) and (c); and
(e) calculating the ATP amount per unit surface by using an area of the collected biofilm formation surface, a liquid volume of the suspended pure water, and a result of the ATP amount in the suspension liquid of (a) obtained by (d).

6. A reverse osmosis membrane filtration plant having a raw water intake unit, a pre-treatment unit, and a reverse osmosis membrane filtration unit having a reverse osmosis membrane module in this order, comprising:
a piping branching at an upstream of the first reverse osmosis membrane module in the reverse osmosis membrane filtration unit for flowing supply water and/or a piping branching at a downstream of the reverse osmosis membrane module in the reverse osmosis membrane filtration unit for flowing reverse osmosis membrane non-permeated water;
a flow container connected to a downstream of the piping(s); and
a flow rate adjustment valve connected to an upstream or downstream of the flow container,
wherein a reverse osmosis membrane used as a biofilm formation base material is rectangular and is rolled in such a manner that a separation function layer surface serves as the inner side and the rolled reverse osmosis membrane is pushed into the flow container along an inner wall of the flow container, wherein the inner side is the part on which the evaluation water inside the flow container flows,
wherein the reverse osmosis membrane is made of the same material as a reverse osmosis membrane which is used in the reverse osmosis membrane filtration unit is contained in the flow container in such a way that reverse osmosis membrane supply water and/or reverse osmosis membrane non-permeated water in the reverse osmosis membrane filtration unit are/is flowed parallel to a surface of a separation function layer of the reverse osmosis membrane used as the biofilm formation base material, and that the reverse osmosis membrane supply water and/or the reverse osmosis membrane non-permeated water are/is not filtered by the reverse osmosis membrane used as the biofilm formation base material, under water flow at a linear speed equal to a non-permeated water linear speed in the reverse osmosis membrane module of the reverse osmosis membrane filtration unit, and equal to an average linear speed on the surface of the reverse osmosis membrane module on which the non-permeated water is flowed and wherein
the reverse osmosis membrane which falls into a size of a circumference of a circle having an inner diameter of D or less and a height of H or less is placed in a cylindrical flow container having an inner diameter of D and a height of H so as to orient a surface faced to the raw water during filtration to an inner side, and fixed in the cylindrical flow container by a physical resilience in a direction of the circumference of the reverse osmosis membrane.

7. The reverse osmosis membrane filtration plant according to claim 6, which is for desalinating sea water.

## Patentansprüche

1. Verfahren zum Betreiben einer Umkehrosmose-Membranfiltrationsanlage, die eine Rohwassereinlasseinheit, eine Vorbehandlungseinheit und eine Umkehrosmose-Membranfiltrationseinheit mit einem Umkehrosmose-Membranmodul in dieser Reihenfolge aufweist, wobei das Verfahren umfasst:
Anordnen einer Umkehrosmose-Membran, die als Biofilmbildungs-Basismaterial in einem Strömungsbehälter verwendet wird, wobei die Umkehrosmose-Membran ein rechteckiges Flächengebilde ist und derart gerollt ist, dass eine Trennfunktionsschichtoberfläche als die Innenseite dient und die gerollte Umkehrosmose-Membran in den Strömungsbehälter längs einer Innenwand des Strömungsbehälters gedrückt wird, wobei die Innenseite der Teil ist, auf dem das Evaluierungswasser im Innern des Strömungsbehälters fließt,
so dass Umkehrosmose-Membranmodul-Speisewasser, das aus einer Rohrleitungsverzweigung stromaufwärts des ersten Umkehrosmose-Membranmoduls in der Umkehrosmose-Membranfiltrationseinheit entnommen wurde, und/oder das Umkehrosmose-Membranmodul nicht-durchdrungenes Wasser, das aus einer Rohrleitungsverzweigung stromabwärts der Umkehrosmose-Membranmodule entnommen wurde, durch welche das das Umkehrosmose-Membranmodul nicht durchdrungene Wasser hindurchfließt, auf eine Oberfläche einer Trennfunktionsschicht des Umkehrosmose-Membran-Flächengebildes geleitet werden/wird, das als Biofilmbildungs-Basismaterial verwendet wird, das im Strömungsbehälter untergebracht ist,
und so dass das Umkehrosmose-Membranmodul-Speisewasser und/oder das das Umkehrosmose-Membranmodul nicht-durchdrungene Wasser durch das Umkehrosmose-Membran-Flächengebilde, das als das im Strömungsbehälter untergebrachte Biofilmbildungs-Basismaterial verwendet wird, aber unter Bedingungen nicht gefiltert werden/wird, bei denen das Umkehrosmose-Membranmodul-Speisewasser und das das Umkehrosmose-Membranmodul nicht-durchdrungene Wasser mit linearer Geschwindigkeit fließen/fließt, die gleichgroß wie eine lineare Geschwindigkeit des das Umkehrosmose-Membranmodul nicht-durchdrungenen Wassers im Umkehrosmose-Membranmodul der Umkehrosmose-Membranfiltrationseinheit ist, und gleichgroß wie eine durchschnittliche lineare Geschwindigkeit auf der Oberfläche des Umkehrosmose-Membranmoduls ist, auf der das nicht durchdrungene Wasser fließt;
Evaluieren einer Biofilmmenge auf dem Umkehrosmose-Membran-Flächengebilde, das als das im Strömungsbehälter untergebrachte Biofilmbildungs-Basismaterial verwendet wird, mit einer Frequenz von einmal täglich bis einmal in sechs Monaten; und
Steuern des Verfahrens zum Betreiben einer Umkehrosmose-Membranfiltrationsanlage basierend auf den Ergebnissen der Evaluierung,
wobei die Umkehrosmose-Membran, die als Biofilmbildungs-Basismaterial verwendet wird, aus dem gleichen Material wie eine Umkehrosmose-Membran hergestellt ist, die in der Umkehrosmose-Membranfiltrationsanlage verwendet wird.

2. Verfahren zum Betreiben einer Umkehrosmose-Membranfiltrationsanlage nach Anspruch 1, wobei die Biofilmmenge auf einer Oberfläche des Umkehrosmose-Membran-Flächengebildes, das als das Biofilmbildungs-Basismaterial verwendet wird, durch Platzieren des Umkehrosmose-Membran-Flächengebildes, das eine Größe eines Umfangs eines Kreises mit einem Innendurchmesser D oder weniger und eine Höhe H oder weniger aufweist, durch Biegen in einen zylindrischen Strömungsbehälter mit einem Innendurchmesser D und einer Höhe H, sodass eine dem Rohwasser während der Filtration zugewandte Oberfläche zu einer Innenseite ausgerichtet ist, und durch Schneiden eines Teils des Umkehrosmose-Membran-Flächengebildes, das im zylindrischen Strömungsbehälter durch eine physikalische Elastizität in Richtung des Umfangs befestigt ist, evaluiert wird.

3. Verfahren zum Betreiben einer Umkehrosmose-Membranfiltrationsanlage nach Anspruch 1, wobei die Steuerung des Betriebsverfahrens der Umkehrosmose-Membranfiltrationsanlage eine Steuerung der Sterilisationsbedingungen oder Reinigungsbedingungen der Umkehrosmose-Membranfiltrationsanlage ist, und die Umkehrosmose-Membran, die als Biofilmbildungs-Basismaterial verwendet wird, unter gleichartigen Steuerungsbedingungen behandelt wird.

4. Verfahren zum Betreiben einer Umkehrosmose-Membranfiltrationsanlage nach Anspruch 1, wobei die Biofilmmenge basierend auf ATP (Adenosin-5'-triphosphat) evaluiert wird, und das Anlagen-Betriebsverfahren so gesteuert wird, dass eine ATP-Menge von 200 pg/cm² oder weniger pro Oberflächeneinheit erreicht wird.

5. Verfahren zum Betreiben einer Umkehrosmose-Membranfiltrationsanlage nach Anspruch 1, wobei das Verfahren ein Verfahren zur Evaluierung der im Rohwasser ausgebildeten Biofilmmenge mit einer Salzkonzentration von 3 % oder mehr durch das ATP-Messverfahren ist, wobei das Verfahren umfasst:
(a) Suspendieren des von der Umkehrosmose-Membran, die als Biofilmbildungs-Basismaterial dient, gesammelten Biofilms in reinem Wasser;
(b) Quantifizieren einer Leuchtkraft der Suspensionsflüssigkeit von (a) unter Verwendung einer Luciferase-Reaktion;
(c) Messen einer Salzkonzentration der Suspensionsflüssigkeit von (a)
(d) Berechnen einer ATP-Menge der Suspensionsflüssigkeit von (a) unter Verwendung einer Korrelationsgleichung einer Salzkonzentrationshemmung, die auf einem Quantifizierungssystem unter Verwendung der Luciferase-Reaktion ausgeübt wird, einer Korrelationsgleichung der ATP-Konzentration und der Leuchtkraft ohne die Hemmung, und der Ergebnisse von (b) und (c);
(e) Berechnen der ATP-Menge pro Oberflächeneinheit unter Verwendung eines Bereichs der gesammelten Biofilmbildungs-Oberfläche, eines Flüssigkeitsvolumens des suspendierten reinen Wassers, und eines Ergebnisses der ATP-Menge in der Suspensionsflüssigkeit von (a), die durch (d) erhalten wurde.

6. Umkehrosmose-Membranfiltrationsanlage, die eine Rohwassereinlasseinheit, eine Vorbehandlungseinheit und eine Umkehrosmose-Membranfiltrationseinheit mit einem Umkehrosmose-Membranmodul in dieser Reihenfolge aufweist, umfassend:
eine Rohrverzweigung stromaufwärts des ersten Umkehrosmose-Membranmoduls in der Umkehrosmose-Membranfiltrationseinheit für fließendes Speisewasser und/oder eine Rohrverzweigung stromabwärts des Umkehrosmose-Membranmoduls in der Umkehrosmose-Membranfiltrationseinheit für fließendes, das Umkehrosmose-Membranmodul nicht durchdrungenes Wasser;
einen Strömungsbehälter, der stromabwärts der Rohrleitung(en) angeschlossen ist; und
ein Durchsatz-Einstellventil, das stromaufwärts oder stromabwärts des Strömungsbehälters angeschlossen ist,
wobei eine Umkehrosmose-Membran, die als Biofilmbildungs-Basismaterial verwendet wird, rechteckig ist und so gerollt ist, dass eine Trennfunktionsschichtoberfläche als die Innenseite dient und die gerollte Umkehrosmose-Membran in den Strömungsbehälter längs einer Innenwand des Strömungsbehälters gedrückt wird, wobei die Innenseite der Teil ist, auf dem das Evaluierungswasser im Innern des Strömungsbehälters fließt, wobei die Umkehrosmose-Membran aus dem gleichen Material wie eine Umkehrosmose-Membran hergestellt ist, die in der Umkehrosmose-Membranfiltrationseinheit verwendet wird, die im Strömungsbehälter so enthalten ist, dass das Umkehrosmose-Membran-Speisewasser und/oder das Umkehrosmose-Membran nicht-durchdrungene Wasser in der Umkehrosmose-Membranfiltrationseinheit parallel zu einer Oberfläche einer Trennfunktionsschicht der Umkehrosmose-Membran, die als Biofilmbildungs-Basismaterial verwendet wird, geleitet werden/wird, und dass das Umkehrosmose-Membran-Speisewasser und/oder das Umkehrosmose-Membran nicht durchdrungene Wasser durch die Umkehrosmose-Membran, die als Biofilmbildungs-Material verwendet wird, unter einer Wasserströmung mit linearer Geschwindigkeit nicht gefiltert werden/wird, die gleich einer Geschwindigkeit des nicht-durchdrungenen Wassers im Umkehrosmose-Membranmodul der Umkehrosmose-Membranfiltrationseinheit ist, und gleich einer durchschnittlichen linearen Geschwindigkeit auf der Oberfläche des Umkehrosmose-Membranmoduls ist, auf die das nicht-durchdrungene Wasser geleitet wird, und wobei
die Umkehrosmose-Membran, die eine Größe eines Umfangs eines Kreises mit einem Innendurchmesser D oder weniger und einer Höhe H oder weniger aufweist, in einem zylindrischen Strömungsbehälter mit einem Innendurchmesser D und einer Höhe H so platziert ist, dass eine dem Rohwasser während einer Filtration zugewandte Oberfläche zu einer Innenseite ausgerichtet ist, und im zylindrischen Strömungsbehälter durch eine physikalische Elastizität in Richtung des Umfangs der Umkehrosmose-Membran befestigt ist.

7. Umkehrosmose-Membranfiltrationsanlage nach Anspruch 6, die zum Entsalzen von Meerwasser dient.

## Revendications

1. Procédé de fonctionnement d'une installation de filtration sur membrane d'osmose inverse ayant une unité d'admission d'eau brute, une unité de prétraitement et une unité de filtration sur membrane d'osmose inverse ayant un module à membrane d'osmose inverse, dans cet ordre, ledit procédé comprenant le fait :
de disposer une membrane d'osmose inverse utilisée en tant que matériau de base de formation de biofilm dans un récipient d'écoulement, où la membrane d'osmose inverse est une feuille rectangulaire et est enroulée de manière à ce qu'une surface de couche à fonction de séparation serve de côté interne et la membrane d'osmose inverse enroulée est poussée dans le récipient d'écoulement le long d'une paroi interne du récipient d'écoulement, où le côté interne est la partie sur laquelle s'écoule l'eau d'évaluation dans le récipient d'écoulement,
de sorte que l'eau d'alimentation de module à membrane d'osmose inverse échantillonnée à partir d'une ramification de tuyauterie en amont du premier module à membrane d'osmose inverse dans l'unité de filtration sur membrane d'osmose inverse et/ou l'eau non-osmosée par le module à membrane d'osmose inverse échantillonnée à partir d'une ramification de tuyauterie en aval des modules à membrane d'osmose inverse à travers laquelle l'eau non-osmosée par le module à membrane d'osmose inverse passe, soient/soit amenée(s) à s'écouler sur une surface d'une couche à fonction de séparation de la feuille de membrane d'osmose inverse utilisée en tant que matériau de base de formation de biofilm reçu dans le récipient d'écoulement,
et de sorte que l'eau d'alimentation de module à membrane d'osmose inverse et/ou l'eau non-osmosée par le module à membrane d'osmose inverse ne soient/ne soit pas filtrée(s) par la feuille de membrane d'osmose inverse utilisée en tant que matériau de base de formation de biofilm reçu dans le récipient d'écoulement mais dans des conditions où l'eau d'alimentation de module à membrane d'osmose inverse et/ou l'eau non-osmosée par le module à membrane d'osmose inverse sont/est amenée(s) à s'écouler à une vitesse linéaire égale à la vitesse linéaire de l'eau non-osmosée dans le module à membrane d'osmose inverse de l'unité de filtration sur membrane d'osmose inverse et égale à une vitesse linéaire moyenne sur la surface du module à membrane d'osmose inverse sur laquelle l'eau non-osmosée est amenée à s'écouler ;
d'évaluer une quantité de biofilm sur la feuille de membrane d'osmose inverse utilisée en tant que matériau de base de formation de biofilm reçu dans le récipient d'écoulement à une fréquence allant d'une fois par jour à une fois tous les six mois ; et
de commander le procédé de fonctionnement d'une installation de filtration sur membrane d'osmose inverse sur la base des résultats de l'évaluation,
où la membrane d'osmose inverse utilisée en tant que matériau de base de formation de biofilm est constituée du même matériau qu'une membrane d'osmose inverse qui est utilisée dans l'installation de filtration sur membrane d'osmose inverse.

2. Procédé de fonctionnement d'une installation de filtration sur membrane d'osmose inverse selon la revendication 1, dans lequel la quantité de biofilm sur une surface de la feuille de membrane d'osmose inverse utilisée en tant que matériau de base de formation de biofilm est évaluée en plaçant la feuille de membrane d'osmose inverse qui s'inscrit dans une dimension d'une circonférence d'un cercle ayant un diamètre interne inférieur ou égal à D et une hauteur inférieure ou égale à H par pliage dans un récipient d'écoulement cylindrique ayant un diamètre interne D et une hauteur H de manière à orienter une surface faisant face à l'eau brute pendant la filtration vers un côté interne, et en découpant une partie de la feuille de membrane d'osmose inverse fixée dans le récipient d'écoulement cylindrique par une résilience physique dans une direction de la circonférence.

3. Procédé de fonctionnement d'une installation de filtration sur membrane d'osmose inverse selon la revendication 1, dans lequel la commande du procédé de fonctionnement de l'installation de filtration sur membrane d'osmose inverse est une commande des conditions de stérilisation ou des conditions de nettoyage de l'unité de filtration sur membrane d'osmose inverse, et la membrane d'osmose inverse utilisée en tant que matériau de base de formation de biofilm est traitée dans des conditions de commande similaires.

4. Procédé de fonctionnement d'une installation de filtration sur membrane d'osmose inverse selon la revendication 1, dans lequel la quantité de biofilm est évaluée sur la base de l'ATP (adénosine-5'-triphosphate), et le procédé de fonctionnement de l'installation est commandé de manière à atteindre une quantité d'ATP inférieure ou égale à 200 pg/cm² par unité de surface.

5. Procédé de fonctionnement d'une installation de filtration sur membrane d'osmose inverse selon la revendication 1, dans lequel le procédé est un procédé d'évaluation de la quantité de biofilm formée dans l'eau brute ayant une concentration en sel supérieure ou égale à 3% par le procédé de mesure d'ATP, ledit procédé comprend le fait :
(a) de mettre en suspension le biofilm collecté à partir de la membrane d'osmose inverse utilisée en tant que matériau de base de formation de biofilm dans de l'eau pure ;
(b) de quantifier une luminosité du liquide de suspension de (a) en utilisant une réaction de la luciférase ;
(c) de mesurer une concentration en sel du liquide de suspension de (a) ;
(d) de calculer une quantité d'ATP du liquide de suspension de (a) en utilisant une équation de corrélation d'une inhibition de concentration en sel devant être exercée sur un système de quantification en utilisant la réaction de la luciférase, une équation de corrélation de la concentration d'ATP et de la luminosité en l'absence de l'inhibition, et les résultats de (b) et (c) ; et
(e) de calculer la quantité d'ATP par unité de surface en utilisant une aire de la surface de formation de biofilm collecté, un volume de liquide de l'eau pure en suspension, et un résultat de la quantité d'ATP dans le liquide de suspension de (a) obtenue par (d).

6. Installation de filtration sur membrane d'osmose inverse ayant une unité d'admission d'eau brute, une unité de prétraitement et une unité de filtration sur membrane d'osmose inverse ayant un module à membrane d'osmose inverse, dans cet ordre, comprenant :
une ramification de tuyauterie en amont du premier module à membrane d'osmose inverse dans l'unité de filtration sur membrane d'osmose inverse pour l'écoulement de l'eau d'alimentation et/ou une ramification de tuyauterie en aval du module à membrane d'osmose inverse dans l'unité de filtration sur membrane d'osmose inverse pour l'écoulement de l'eau non-osmosée par la membrane d'osmose inverse ;
un récipient d'écoulement relié en aval de la/des tuyauterie(s) ; et
une soupape d'ajustement de débit reliée en amont ou en aval du récipient d'écoulement,
où une membrane d'osmose inverse utilisée en tant que matériau de base de formation de biofilm est rectangulaire et est enroulée de manière à ce qu'une surface de couche à fonction de séparation serve de côté interne et la membrane d'osmose inverse enroulée est poussée dans le récipient d'écoulement le long d'une paroi interne du récipient d'écoulement, où le côté interne est la partie sur laquelle s'écoule l'eau d'évaluation à l'intérieur du récipient d'écoulement,
où la membrane d'osmose inverse qui est constituée du même matériau qu'une membrane d'osmose inverse qui est utilisée dans l'unité de filtration sur membrane d'osmose inverse est contenue dans le récipient d'écoulement de manière à ce que l'eau d'alimentation de membrane d'osmose inverse et/ou l'eau non-osmosée par la membrane d'osmose inverse dans l'unité de filtration sur membrane d'osmose inverse soient/soit amenée(s) à s'écouler parallèlement à une surface d'une couche à fonction de séparation de la membrane d'osmose inverse utilisée en tant que matériau de base de formation de biofilm, et que l'eau d'alimentation de membrane d'osmose inverse et/ou l'eau non-osmosée par la membrane d'osmose inverse ne soient/ne soit pas filtrée(s) par la membrane d'osmose inverse utilisée en tant que matériau de base de formation de biofilm, sous un écoulement d'eau à une vitesse linéaire égale à la vitesse linéaire de l'eau non-osmosée dans le module à membrane d'osmose inverse de l'unité de filtration sur membrane d'osmose inverse, et égale à une vitesse linéaire moyenne sur la surface du module à membrane d'osmose inverse sur laquelle l'eau non-osmosée est amenée à s'écouler et où
la membrane d'osmose inverse qui s'inscrit dans une dimension d'une circonférence d'un cercle ayant un diamètre interne inférieur ou égal à D et une hauteur inférieure ou égale à H est placée dans un récipient d'écoulement cylindrique ayant un diamètre interne D et une hauteur H de manière à orienter une surface faisant face à l'eau brute pendant la filtration vers un côté interne, et fixée dans le récipient d'écoulement cylindrique par une résilience physique dans une direction de la circonférence de la membrane d'osmose inverse.

7. Installation de filtration sur membrane d'osmose inverse selon la revendication 6, qui est destinée au dessalement de l'eau de mer.
